# EUROPÄISCHE PATENTSCHRIFT

(11) **EP 4 326 548 B1**
(45) Veröffentlichungstag und Bekanntmachung des Hinweises auf die Patenterteilung: **02.12.2026**
(21) Anmeldenummer: 22708951.3
(22) Anmeldetag: 02.03.2022
(51) Int. Cl.: B32B 17/10, B32B 3/08

(54) **VERGLASUNGSEINHEIT MIT ELEKTRISCH STEUERBAREN OPTISCHEN EIGENSCHAFTEN MIT MEHREREN UNABHÄNGIGEN SCHALTBEREICHEN**
GLAZING UNIT WITH ELECTRICALLY CONTROLLABLE OPTICAL PROPERTIES WITH MULTIPLE INDEPENDENT SWITCHING AREAS
UNITÉ DE VITRAGE AVEC DES CARACTÉRISTIQUES OPTIQUES POUVANT ÊTRE COMMANDÉES DE MANIÈRE ÉLECTRIQUE POURVU DE PLUSIEURS ZONES DE COMMUTATION INDÉPENDANTES

(30) Priorität: 19.04.2021 EP 21169057
(43) Veröffentlichungstag der Anmeldung: 28.02.2024
(73) Patentinhaber: Saint-Gobain Sekurit France, 60150 Thourotte (FR)
(72) Erfinder: STELZER, Richard, 40547 Düsseldorf (DE)
(74) Vertreter: Feist, Florian Arno
(86) Internationale Anmeldenummer: PCT/EP2022/055256
(87) Internationale Veröffentlichungsnummer: WO 2022/223187

(56) Entgegenhaltungen:
- WO-A1-2019/011891
- US-A1- 2014 300 945

## Beschreibung

Die Erfindung betrifft eine Verglasungseinheit mit elektrisch steuerbaren optischen Eigenschaften, deren Verwendung sowie ein Verfahren zu deren Steuerung.

Verglasungseinheiten mit elektrisch steuerbaren optischen Eigenschaften sind als solche bekannt. Sie umfassen Verbundscheiben, welche mit Funktionselementen ausgestattet, deren optische Eigenschaften durch eine angelegte elektrische Spannung verändert werden können. Das Anlegen der elektrischen Spannung erfolgt über eine Steuereinheit, welche an zwei Flächenelektroden des Funktionselements angeschlossen ist, zwischen denen sich die aktive Schicht des Funktionselements befindet. Ein Beispiel für solche Funktionselemente sind SPD-Funktionselemente (*suspended particle device*)*,* die beispielsweise aus EP 0876608 B1 und WO 2011033313 A1 bekannt sind. Durch die angelegte Spannung lässt sich die Transmission von sichtbarem Licht durch SPD-Funktionselemente steuern. Ein weiteres Beispiel sind PDLC-Funktionselemente (*polymer dispersed liquid crystal*), die beispielsweise aus DE 102008026339 A1 bekannt sind. Die aktive Schicht enthält dabei Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch eine Herabsetzung der Gesamttransmission als durch eine Erhöhung der Streuung, wodurch die freie Durchsicht verhindert oder ein Blendschutz gewährleistet werden kann. Außerdem sind elektrochrome Funktionselemente bekannt, beispielsweise aus US 20120026573 A1, WO 2010147494 A1 und EP 1862849 A1 und WO 2012007334 A1, bei denen eine Transmissionsänderung durch elektrochemische Prozesse erfolgt, welche durch die angelegte elektrische Spannung induziert wird.

Solche Verglasungseinheiten können beispielsweise als Fahrzeugscheiben verwendet werden, deren Lichttransmissionsverhalten dann elektrisch gesteuert werden kann. Sie können beispielsweise als Dachscheiben verwendet werden, um Sonneneinstrahlung zu verringern oder störende Reflexionen abzumindern. Solche Dachscheiben sind beispielsweise aus DE 10043141 A1 und EP 3456913 A1 bekannt. Ebenfalls wurden Windschutzscheiben vorgeschlagen, bei denen durch ein schaltbares Funktionselement eine elektrisch steuerbare Sonnenblende realisiert ist, um die herkömmliche mechanisch klappbare Sonnenblende in Kraftfahrzeugen zu ersetzen. Windschutzscheiben mit elektrisch steuerbaren Sonnenblenden sind beispielsweise bekannt aus DE 102013001334 A1, DE 102005049081 B3, DE 102005007427 A1 und DE 102007027296 A1.

Es ist ebenfalls bekannt, solche Verglasungseinheit beziehungsweise die schaltbaren Funktionselemente mit mehreren Schaltbereichen zu versehen, deren optische Eigenschaften unabhängig voneinander geschaltet werden können. So kann ein Bereich des Funktionselements selektiv abgedunkelt oder mit einer hohen Lichtstreuung versehen werden, während andere Bereiche transparent bleiben. Verglasungseinheiten mit unabhängigen Schaltbereichen und ein Verfahren zu ihrer Herstellung sind beispielsweise aus WO 2014072137 A1 bekannt. Weiter sei auf WO 2017157626 A1 verwiesen.

Die unabhängigen Schaltbereiche werden typischerweise dadurch ausgebildet, dass eine der Flächenelektroden durch Isolierungslinien in voneinander getrennte Bereiche (Segmente) aufgeteilt wird, welche jeweils unabhängig voneinander mit der Steuereinheit verbunden sind und daher unabhängig angesteuert werden können, während die andere Flächenelektrode keine Isolierungslinien aufweist. Die Isolierungslinien werden typischerweise durch Laserbearbeitung in die Flächenelektrode eingebracht. Die Flächenelektroden können nicht hinsichtlich einer optimalen elektrischen Leitfähigkeit ausgewählt werden, da sie transparent sein müssen, um die Durchsicht durch die Verbundscheibe zu gewährleisten. Typischerweise werden ITO-Schichten als Flächenelektroden verwendet, welche eine vergleichsweise geringe Leitfähigkeit beziehungsweise einen vergleichsweise hohen elektrischen Widerstand aufweisen. Hieraus ergibt sich ein Problem, wenn nur einige der Schaltbereiche mit einer Spannung beaufschlagt werden. Die Spannung führt zu einem Stromfluss durch die aktive Schicht im jeweiligen Schaltbereich, der wiederum aufgrund des elektrischen Widerstands der nicht-segmentierten Flächenelektrode zu einer Potentialverschiebung derselben führt. Dieser Effekt wird auch als "Ground Shift" bezeichnet. Dadurch wird nun auch eine gewisse Spannung in denjenigen Schaltbereichen erzeugt, die eigentlich nicht geschaltet werden sollen, welche dann ebenfalls ihre optischen Eigenschaften in einem gewissen Maße verändern, ohne dass dies erwünscht ist. Dieser Effekt wird auch als Übersprechen ("Cross Talk") zwischen den Schaltbereichen bezeichnet. Der "Cross Talk" tritt insbesondere deswegen störend in Erscheinung, weil Schaltbereiche, die nicht aktiviert und daher spannungsfrei sein sollen, typischerweise auf das Anschlusspotential der nicht segmentierten Flächenelektrode geschaltet werden (Bezugspotential, "Masse"), um einerseits eine schnelle Entladung der einzelnen Segmente im Falle ihrer Abschaltung zu gewährleisten und andererseits einen Einfluss sogenannter "Schmutzwiderstände" (unerwünschte elektrische Verbindungen aufgrund von Staub oder Feuchtigkeit) zu vermeiden. Dadurch bildet sich ein geschlossener Stromkreislauf durch alle Schaltbereiche aus.

Grundsätzlich wäre es möglich, den "Cross Talk" dadurch zu vermeiden, dass auch die zweite Flächenelektrode durch Isolierungslinien entsprechend der Schaltbereiche segmentiert wird. Sollen jedoch beiden Flächenelektroden in einem Bearbeitungsschritt segmentiert werden, so ist hierfür starke Laserstrahlung erforderlich, welche das ästhetische Erscheinungsbild der Verbundscheibe herabsetzt, beispielsweise infolge von Verbrennungseffekten. Werden die beiden Flächenelektroden alternativ dazu einzeln segmentiert, so ist es schwierig, die Isolierungslinien den beiden Flächenelektroden genau in Deckung zu bringen. Außerdem sind "doppelte" Isolierungslinien in beiden Flächenelektroden stets optisch auffälliger als Isolierungslinien in nur einer Flächenelektrode, selbst wenn sie perfekt in Deckung angeordnet sind.

WO 2019011891 A1 offenbart eine Verglasungseinheit mit elektrisch steuerbaren optischen Eigenschaften, wobei die Temperatur der Verbundscheibe ermittelt wird und die elektrische Spannung, die an die Flächenelektroden des elektrisch steuerbaren Funktionselements angelegt wird, abhängig von der Temperatur gewählt wird. Dadurch soll einer Beschädigung des Funktionselements durch eine lokale Temperaturüberhöhung entgegengewirkt werden. Das Funktionselement kann optional in mehrere unabhängige Schaltbereiche segmentiert sein, wobei WO 2019011891 A1 nahelegt, hierzu beide Flächenelektroden durch Isolierungslinien in Elektrodensegmente aufzuteilen. Das Problem des "Cross Talk" tritt in diesem Falle nicht auf.

Aus US 2014300945 A1 ist bekannt, dass die Temperatur einer Fensterscheibe durch Messung der Impedanz der aktiven Schicht eines elektrochromen Funktionselements bestimmt werden kann.

Es besteht daher Bedarf an verbesserten Verglasungseinheiten mit elektrisch steuerbaren optischen Eigenschaften mit mehreren unabhängigen Schaltbereichen, bei denen der Effekt des "Cross Talks" zwischen aktivierten und nicht-aktivierten Schaltbereichen vermieden oder zumindest signifikant verringert wird. Der vorliegenden Erfindung liegt die Aufgabe zugrunde, eine solche verbesserte Verglasungseinheit und ein Verfahren zu Ihrer Steuerung bereitzustellen

Die Aufgabe wird erfindungsgemäß gelöst durch eine Verglasungseinheit mit elektrisch steuerbaren optischen Eigenschaften mit mehreren unabhängigen Schaltbereichen, die eine Verbundscheibe und eine Steuereinheit umfasst. Die Verbundscheibe umfasst eine Außenscheibe und eine Innenscheibe, die über eine thermoplastische Zwischenschicht miteinander verbunden sind, und ein elektrisch steuerbares Funktionselement, welches zwischen der Außenscheibe und der Innenscheibe angeordnet ist. Das Funktionselement weist eine aktive Schicht mit elektrisch steuerbaren optischen Eigenschaften zwischen einer ersten Flächenelektrode und einer zweiten Flächenelektrode auf. Die Steuereinheit ist geeignet, die optischen Eigenschaften des Funktionselements zu steuern. Die erste Flächenelektrode ist durch mindestens eine Isolierungslinie in mindestens zwei getrennte Elektrodensegmente aufgeteilt. Jedes Elektrodensegment der ersten Flächenelektrode und die zweite Flächenelektrode sind elektrisch mit der Steuereinheit verbunden, so dass zwischen jedem Elektrodensegment der ersten Flächenelektrode und der zweiten Flächenelektrode unabhängig voneinander eine elektrische Spannung angelegt werden kann, um die optischen Eigenschaften des dazwischen befindlichen Abschnitts der aktiven Schicht zu steuern.

Die zweite Flächenelektrode weist keine Isolierungslinien auf oder weist eine geringere Anzahl von Isolierungslinien und infolgedessen eine geringere Anzahl von Elektrodensegmenten auf als die erste Flächenelektrode, so dass mindestens einem Elektrodensegment der zweiten Flächenelektrode mehrere Elektrodensegmente der ersten Flächenelektrode zugeordnet sind. Dabei ist jede etwaige Isolierungslinie der zweiten Flächenelektrode in Durchsichtrichtung durch die Verbundscheibe mit einer Isolierungslinie der ersten Flächenelektrode in Deckung angeordnet.

Erfindungsgemäß ist die Steuereinheit geeignet, die Temperatur der Verbundscheibe zu ermitteln und eine elektrische Spannung zwischen den Elektrodensegmenten der ersten Flächenelektrode einerseits und der zweiten Flächenelektrode andererseits anzulegen, deren Betrag abhängig von der Temperatur der Verbundscheibe ist.

Die Aufgabe wird außerdem gelöst durch ein Verfahren zum Steuern einer erfindungsgemäßen Verglasungseinheit mit elektrisch steuerbaren optischen Eigenschaften mit mehreren unabhängigen Schaltbereichen. Das erfindungsgemäße Verfahren zeichnet sich dadurch aus, dass die Temperatur der Verbundscheibe bestimmt wird und mittels der Steuereinheit zwischen mindestens einem Elektrodensegment der ersten Flächenelektrode einerseits und der zweiten Flächenelektrode andererseits eine elektrische Spannung angelegt wird, deren Betrag abhängig von der bestimmten Temperatur ist.

Die Verglasungseinheit und das Verfahren werden im Folgenden gemeinsam vorgestellt, wobei sich Erläuterungen und bevorzugte Ausgestaltungen gleichermaßen auf

Verglasungseinheit und Verfahren beziehen. Sind bevorzugte Merkmale im Zusammenhang mit dem Verfahren beschrieben, so ergibt sich daraus, dass auch die Verglasungseinheit bevorzugt entsprechend ausgelegt und geeignet ist. Sind umgekehrt bevorzugte Merkmale im Zusammenhang mit der Verglasungseinheit beschrieben, so ergibt sich daraus, dass auch das Verfahren bevorzugt entsprechend durchgeführt wird.

Der Erfindung liegt die Erkenntnis zugrunde, dass das Schaltverhalten typischer elektrisch schaltbarer Funktionselemente temperaturabhängig ist. Eine gegebene Spannung, die an die Flächenelektroden angelegt wird, führt zu einer umso stärkeren Veränderung der optischen Eigenschaften, je höher die Temperatur ist. Dies hat einerseits die Konsequenz, dass der störende Effekt des "Cross Talks" bei höheren Temperaturen ausgeprägter ist, weil die infolge des "Ground Shift" hervorgerufene Spannung in den Schaltbereichen, die eigentlich spannungsfrei sein sollten, eine stärkere Veränderung der optischen Eigenschaften, das heißt einen ausgeprägteren Schaltzustand hervorruft. Andererseits sind aber bei höheren Temperaturen auch geringere Spannungen erforderlich, um einen gewünschten Schaltzustand der Schaltbereiche zu erreichen. Wird die Temperatur der Verbundscheibe bei der Bestimmung der anzulegenden Spannung berücksichtigt, wird einerseits der gewünschte Schaltzustand präzise eingestellt und andererseits der störende "Cross Talk" (also die unbeabsichtigte Schaltung von Bereichen, die eigentlich spannungsfrei sein sollten) minimiert, insbesondere dadurch, dass die Spannung gerade hoch genug gewählt wird, um den gewünschten Schaltzustand bei gegebener Temperatur zu erreichen. Das ist der große Vorteil der Erfindung.

Die erfindungsgemäße Verbundscheibe umfasst mindestens eine Außenscheibe und eine Innenscheibe, die über eine thermoplastische Zwischenschicht miteinander verbunden sind. Die Verbundscheibe ist dafür vorgesehen, in einer Fensteröffnung (insbesondere einer Fensteröffnung eines Fahrzeugs, alternativ aber auch einer Fensteröffnung eines Gebäudes oder eines Raums) den Innenraum gegenüber der äußeren Umgebung abzutrennen. Mit Innenscheibe wird im Sinne der Erfindung die dem Innenraum zugewandte Scheibe bezeichnet. Mit Außenscheibe wird die der äußeren Umgebung zugewandte Scheibe bezeichnet. Die Außenscheibe und die Innenscheibe weisen jeweils eine außenseitige und eine innenraumseitige Oberfläche auf und eine dazwischen verlaufende, umlaufende Seitenkantenfläche. Mit außenseitiger Oberfläche wird im Sinne der Erfindung diejenige Hauptfläche bezeichnet, welche dafür vorgesehen ist, in Einbaulage der äußeren Umgebung zugewandt zu sein. Mit innenraumseitiger Oberfläche wird im Sinne der Erfindung diejenige Hauptfläche bezeichnet, welche dafür vorgesehen ist, in Einbaulage dem Innenraum zugewandt zu sein. Die innenraumseitige Oberfläche der Außenscheibe und die außenseitige Oberfläche der Innenscheibe sind einander zugewandt und durch die thermoplastische Zwischenschicht miteinander verbunden.

Die erfindungsgemäße Verbundscheibe enthält ein Funktionselement mit elektrisch steuerbaren optischen Eigenschaften, das zwischen der Außenscheibe und der Innenscheibe angeordnet, also in die Zwischenschicht eingelagert ist. Das Funktionselement ist bevorzugt zwischen mindestens zwei Schichten von thermoplastischem Material der Zwischenschicht angeordnet, wobei es durch die erste Schicht mit der Außenscheibe und durch die zweite Schicht mit der Innenscheibe verbunden ist. Alternativ kann das Funktionselement aber auch direkt auf der zur Zwischenschicht hingewandten Oberfläche der Außenscheibe oder der Innenscheibe angeordnet sein. Bevorzugt ist die Seitenkante des Funktionselements vollständig von der Zwischenschicht umgeben, so dass sich das Funktionselement nicht bis zur Seitenkante der Verbundscheibe erstreckt und somit keinen Kontakt zur umgebenden Atmosphäre hat.

Das Funktionselement umfasst mindestens eine aktive Schicht und zwei Flächenelektroden, die beidseitig der aktiven Schicht angeordnet sind, so dass die aktive Schicht zwischen den Flächenelektroden angeordnet ist. Die Flächenelektroden und die aktive Schicht sind typischerweise im Wesentlichen parallel zu den Oberflächen der Außenscheibe und der Innenscheibe angeordnet. Die aktive Schicht weist die veränderlichen optischen Eigenschaften auf, die durch eine über die Flächenelektroden an die aktive Schicht angelegte elektrische Spannung gesteuert werden können. Unter elektrisch steuerbaren optischen Eigenschaften werden im Sinne der Erfindung insbesondere solche Eigenschaften verstanden, die stufenlos steuerbar sind. Unter dem Schaltzustand des Funktionselements wird dabei im Sinne der Erfindung das Ausmaß bezeichnet, mit dem die optischen Eigenschaften gegenüber dem spannungsfreien Zustand verändert sind. Ein Schaltzustand von 0% entspricht dem spannungsfreien Zustand, ein Schaltzustand von 100% der maximalen Änderung der optischen Eigenschaften. Durch geeignete Wahl der Spannung sind dazwischen stufenlos alle Schaltzustände realisierbar. Ein Schaltzustand von 20% entspricht beispielsweise einer Änderung der optischen Eigenschaften um 20% der maximalen Änderung. Die besagten optischen Eigenschaften betreffen insbesondere die Lichttransmission und/oder das Streuverhalten.

Grundsätzlich ist es aber auch denkbar, dass die elektrisch steuerbaren optischen Eigenschaften nur zwischen zwei diskreten Zuständen geschaltet werden können. Dann existieren nur zwei Schaltzustände nämlich 0% und 100%. Ebenso ist es denkbar, dass die elektrisch steuerbaren optischen Eigenschaften zwischen mehr als zwei diskreten Zuständen geschaltet werden können.

Die Flächenelektroden sind bevorzugt transparent, was im Sinne der Erfindung bedeutet, dass sie eine Lichttransmission im sichtbaren Spektralbereich von mindestens 50% aufweisen, bevorzugt mindestens 70%, besonders bevorzugt mindestens 80%. Die Flächenelektroden enthalten bevorzugt zumindest ein Metall, eine Metalllegierung oder ein transparentes leitfähiges Oxid (*transparent conducting oxide,* TCO). Die Flächenelektroden können beispielsweise auf Basis von Silber, Gold, Kupfer, Nickel, Chrom, Wolfram, Indium-Zinnoxid (ITO), Gallium-dotiertem oder Aluminium-dotiertem Zinkoxid und/oder Fluordotiertem oder Antimon-dotiertem Zinnoxid ausgebildet sein, bevorzugt auf Basis von Silber oder ITO. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Die erste Flächenelektrode weist erfindungsgemäß mindestens zwei Segmente (Elektrodensegmente) auf, welche durch eine Isolierungslinie voneinander getrennt sind. Unter der Isolierungslinie wird ein linienartiger Bereich verstanden, in dem das Material der Flächenelektrode nicht vorhanden ist, so dass die angrenzenden Segmente stofflich voneinander getrennt sind und daher elektrisch voneinander isoliert sind. Damit ist gemeint, dass keine direkte elektrische Verbindung zwischen den Elektrodensegmenten besteht, wobei die Elektrodensegmente allerdings über die mit ihnen in Kontakt befindliche aktive Schicht indirekt in gewissem Maße elektrisch leitend miteinander verbunden sein können. Die erste Flächenelektrode kann durch mehrere Isolierungslinien in mehrere Segmente aufgeteilt sein. Jedes Elektrodensegment bildet einen Schaltbereich der Verglasungsanordnung aus. Die Anzahl der Elektrodensegmente kann vom Fachmann den Erfordernissen im Einzelfall entsprechend frei gewählt werden. In einer bevorzugten Ausgestaltung verlaufen die Isolierungslinien im Wesentlichen parallel zueinander und erstrecken sich von einer Seitenkante der Flächenelektrode zur gegenüberliegenden Seitenkante. Es sind aber auch beliebige andere geometrische Formen denkbar.

Die Isolierungslinien weisen beispielsweise eine Breite von 5 µm bis 500 µm, insbesondere 20 µm bis 200 µm auf. Sie werden bevorzugt mittels Laserstrahlung in die Flächenelektrode eingebracht. Die Breite der Segmente, also der Abstand benachbarten Isolierungslinien kann vom Fachmann gemäß den Anforderungen im Einzelfall geeignet gewählt werden.

Die zweite Flächenelektrode und die aktive Schicht bilden bevorzugt jeweils eine zusammenhängende, vollständige Schicht, welche nicht durch Isolierungslinien in Segmente aufgeteilt sind. Grundsätzlich ist es aber auch denkbar, dass die zweite Flächenelektrode in geringerem Maße segmentiert ist als die erste Flächenelektrode, also weniger Isolierungslinien und Elektrodensegmente aufweist, so dass mindestens einem Elektrodensegment der zweiten Flächenelektrode mehrere Elektrodensegmente der ersten Flächenelektrode zugeordnet sind. Auch in diesem Fall tritt das Problem des "Cross Talks" auf, was durch den erfindungsgemäßen Ansatz reduziert werden kann. Jede Isolierungslinie der zweiten Flächenelektrode ist in Durchsichtrichtung durch die Verbundscheibe mit einer Isolierungslinie der ersten Flächenelektrode in Deckung angeordnet.

Die Elektrodensegmente der ersten Flächenelektrode sind unabhängig voneinander elektrisch mit der Steuereinheit verbunden, so dass an jedes Elektrodensegment (unabhängig von den anderen Elektrodensegmenten) ein erstes (im Falle einer Wechselspannung zeitlich veränderliches) elektrisches Potential angelegt werden kann, das im Sinne der Erfindung als Schaltpotential bezeichnet wird. Die zweite Flächenelektrode ist ebenfalls elektrisch mit der Steuereinheit verbunden, so dass an die zweite Flächenelektrode insgesamt ein zweites elektrisches Potential angelegt werden kann, das im Sinne der Erfindung als Bezugspotential ("Ground") bezeichnet wird. Sind des erste und das zweite Potential identisch, so liegt im jeweiligen Schaltbereich keine Spannung zwischen den Elektroden an (Schaltzustand 0%). Sind des erste und das zweite Potential unterschiedlich, so liegt im jeweiligen Schaltbereich eine Spannung zwischen den Elektroden an, wodurch ein endlicher Schaltzustand erzeugt wird.

In einer Variante der Erfindung ist auch die zweite Flächenelektrode segmentiert, allerdings in geringerem Maße als die erste Flächenelektrode, so dass mindestens einem Elektrodensegment der zweiten Flächenelektrode mehrere Elektrodensegmente der ersten Flächenelektrode zugeordnet sind. In diesem Fall sind auch die Elektrodensegmente der zweiten Flächenelektrode unabhängig voneinander elektrisch mit der Steuereinheit verbunden, so dass an jedes Elektrodensegment (unabhängig von den anderen Elektrodensegmenten) ein zweites elektrisches Potential (Bezugspotential, "Ground") angelegt werden kann. Es existiert aber zumindest ein Elektrodensegment der zweiten Flächenelektrode, welches das Bezugspotential für mehrere Schaltbereiche bereitstellt. Die betroffenen Schaltbereiche sind dadurch unabhängig voneinander steuerbar, dass das Schaltpotential unabhängig voneinander an die Elektrodensegmente der ersten Flächenelektrode angelegt werden kann, während an das zugeordnete Elektrodensegment der zweiten Flächenelektrode insgesamt ein einzelnes Bezugspotential angelegt wird.

Die Steuereinheit ist dafür vorgesehen und geeignet, die optischen Eigenschaften des Funktionselements zu steuern. Die Steuereinheit ist elektrisch leitend einerseits mit den Flächenelektroden des Funktionselements verbunden und andererseits mit einer Spannungsquelle. Die Steuereinheit beinhaltet die erforderlichen elektrischen und/oder elektronischen Bauteile, um in Abhängigkeit von einem Schaltzustand die erforderliche Spannung an die Flächenelektroden anzulegen. Der Schaltzustand kann dabei vom Benutzer vorgegeben werden (beispielsweise durch Bedienung eines Schalters, einer Taste oder eines Dreh- oder Schiebereglers), durch Sensoren ermittelt werden und/oder über eine digitale Schnittstelle vom zentralen Steuergerät des Fahrzeugs (falls die Verbundscheibe eine Fahrzeugscheibe ist, üblicherweise LIN-Bus oder CAN-Bus) übermittelt werden. Die Schalter, Tasten, Dreh- oder Schieberegler können beispielsweise in den Armaturen des Fahrzeugs integriert sein, falls die Verbundscheibe eine Fahrzeugscheibe ist. Es können aber auch Berührungsschaltflächen direkt in die Verbundscheibe integriert sein, beispielsweise kapazitive oder resistive Schaltflächen. Alternativ kann das Funktionselement auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Die Steuereinheit kann beispielsweise elektronische Prozessoren, Spannungswandler, Transistoren und andere Bauteile umfassen.

Die Spannung, welche an die Flächenelektroden angelegt wird, ist eine Wechselspannung. Die Spannungsquelle ist eine Gleichspannungsquelle, welche eine Gleichspannung bereitstellt und die Steuereinheit damit versorgt. Diese Situation tritt beispielweise in einem Fahrzeug auf, wenn die Verbundscheibe eine Fahrzeugscheibe ist und an die Bordspannung angeschlossen ist. Die Steuereinheit ist dabei bevorzugt an die Bordelektrik angeschlossen, woher sie ihrerseits die elektrische Spannung und optional die Information über den Schaltzustand bezieht. Die Steuereinheit ist daher mit mindestens einem Wechselrichter ausgestattet, um die Gleichspannung in die Wechselspannung zu wandeln. In einer ersten Ausgestaltung weist die Steuereinheit einen einzelnen Wechselrichter auf. Zur separaten Ansteuerung der Elektrodensegmente der ersten Flächenelektrode weist ein Ausgangspol des Wechselrichters mehrere unabhängige Ausgänge auf, wobei jedes Elektrodensegment an einen der Ausgänge angeschlossen ist. Jedem Schaltbereich ist also ein Ausgang des Wechselrichters zugeordnet und mit dem zugehörigen Elektrodensegment der ersten Flächenelektrode verbunden. Die einzelnen Ausgänge sind typischerweise durch Schalter realisiert, wobei der Wechselrichter eine Spannung erzeugt, welche anschließend geschaltet wird. Diese Schalter können direkt im Wechselrichter integriert sein. Alternativ ist es aber auch möglich, dass der Wechselrichter selbst streng genommen nur einen einzigen Ausgang aufweist, an welchen dann externe Schalter angeschlossen sind, um die Spannung auf die Schaltbereiche zu verteilen. Im Sinne der Erfindung werden auch solche extern angeschlossenen Schalter als Ausgänge des Wechselrichters betrachtet. Die zweite Flächenelektrode ist ebenfalls an den Wechselrichter angeschlossen. In einer zweiten Ausgestaltung weist die Steuereinheit mehrere Wechselrichter auf, wobei zur separaten Ansteuerung der Elektrodensegmente der ersten Flächenelektrode jedes Elektrodensegment an einen eigenen Wechselrichter angeschlossen ist. Jedem Schaltbereich ist also ein Wechselrichter zugeordnet und mit dem zugehörigen Elektrodensegment der ersten Flächenelektrode verbunden. Die erste Ausgestaltung hat den Vorteil, dass sie kostengünstiger und platzsparender ist. Sie hat allerdings den Nachteil, dass die Schaltbereiche lediglich gleichsam digital schaltbar sind zwischen einem Schaltzustand von 0% und einem endlichen Schaltzustand, welcher der gerade anliegenden Ausgangsspannung des Wechselrichters entspricht. Die Schaltbereiche können nicht mit unterschiedlichen endlichen Schaltzuständen versehen werden (gleichsam unabhängig "dimmbar" sein), was bei der zweiten Ausgestaltung problemlos möglich ist.

Der oder die Wechselrichter können derart betrieben werden, dass eine echte Wechselspannung erzeugt wird, inklusive deren negativer Anteile. Dies ist sowohl für den Fall möglich, dass nur ein einzelner Wechselrichter mit unabhängigen Ausgängen vorhanden ist, als auch für den Fall, dass jedem Schaltbereich ein eigener Wechselrichter zugeordnet ist. Da im Falle einer Gleichspannungsquelle, wie beispielsweise im Falle eines Fahrzeugs, allerdings keine negativen Potentiale zur Verfügung stehen, ist diese Lösung technisch vergleichsweise aufwändig. Es ist alternativ möglich und häufig bevorzugt, die Wechselspannung gleichsam zu simulieren. Dabei ist die Steuereinheit mit mehreren Wechselrichtern ausgestattet, wobei jedes Elektrodensegment der ersten Flächenelektrode an einen separaten Wechselrichter angeschlossen und die zweite Flächenelektrode an einen weiteren Wechselrichter. Jedem Elektrodensegment der ersten Flächenelektrode sowie der zweiten Flächenelektrode ist also jeweils ein eigener Wechselrichter zugeordnet. Die Potentiale der Wechselrichter werden mit einer veränderlichen Funktion moduliert, beispielsweise einer Sinusfunktion, wobei die Potentiale der Wechselrichter der Elektrodensegmente der ersten Flächenelektrode in Phase sind und das Potential des Wechselrichters der zweiten Flächenelektrode dazu phasenverschoben ist, insbesondere mit einer Phasenverschiebung von 180°. Das Signal für die zweite Flächenelektrode ist dann gegenüber demjenigen der ersten Flächenelektrode invertiert. So wird eine zeitlich veränderliche, periodische Potentialdifferenz erzeugt, mit abwechselnd relativ positiven und relativ negativen Beiträgen, was einer Wechselspannung entspricht.

Da die Bordspannung von Fahrzeugen (beispielsweise 12 bis 14 V) typischerweise nicht ausreichend ist, um das Funktionselement vollständig zu schalten, ist die Steuereinheit darüber hinaus bevorzugt mit einem Gleichspannungswandler ausgestattet, der geeignet ist, die bereitgestellte Speisespannung (Primärspannung) zu erhöhen, das heißt in eine höhere Sekundärspannung zu wandeln (beispielsweise 65 V). Die Anwendung eines Gleichspannungswandler ist nicht auf die Situation in Fahrzeugen beschränkt, sondern kann auch in anderen Fällen erforderlich oder vorteilhaft sein. Die Steuereinheit ist an die Gleichspannungsquelle angeschlossen und wird von dieser mit einer Primärspannung versorgt. Die Primärspannung wird durch den Gleichspannungswandler in die höhere Sekundärspannung gewandelt. Die Sekundärspannung wird durch den Wechselrichter in eine Wechselspannung gewandelt (beispielsweise 48 V), wozu dieser geeignet ist. Die Wechselspannung wird dann einerseits an die Elektrodensegmente der ersten Flächenelektrode und andererseits an die zweite Flächenelektrode angelegt.

Die Sekundärspannung beträgt in einer vorteilhaften Ausgestaltung von 5 V bis 70 V, die Wechselspannung von 5 V bis 50 V.

Das Funktionselement wird durch die Steuereinheit bevorzugt derart betrieben, dass die Elektrodensegmente der ersten Flächenelektrode in denjenigen Schaltbereichen, die einen Schaltzustand von 0% aufweisen sollen, mit einem elektrischen Potential belegt werden, welches dem nominalen Potential der zweiten Flächenelektrode entspricht. Durch die beschriebene Potentialverschiebung der zweiten Flächenelektrode ("Ground Shift") tritt dann der unerwünschte "Cross Talk" in Erscheinung. Bei dieser Art von Schaltung bilden alle Schaltbereiche einen geschlossenen Stromkreis aus unter Beteiligung aller Elektrodensegmente der ersten Flächenelektrode sowie der zweiten Flächenelektrode. Sie ist vorteilhaft im Hinblick auf ein schnelles Schaltverhalten durch eine schnelle Entladung der einzelnen Schaltbereiche. Außerdem wird ein störender Einfluss sogenannter "Schmutzwiderstände" (unerwünschte elektrische Verbindungen aufgrund von Staub oder Feuchtigkeit) vermieden.

Erfindungsgemäß wird die Temperatur der Verbundscheibe bestimmt, um die anzulegende Spannung an diese Temperatur anzupassen. Dabei wird davon ausgegangen, dass die Verbundscheibe insgesamt eine homogene Temperatur aufweist, also die Temperatur des Funktionselements mit der Temperatur anderer Bereiche der Verbundscheibe übereinstimmt, was typischerweise zumindest näherungsweise der Fall ist. Die Bestimmung der Temperatur der Verbundscheibe entspricht demnach zumindest näherungsweise der Bestimmung der Temperatur des Funktionselements.

Erfindungsgemäß ist die Steuereinheit geeignet, die elektrische Impedanz der aktiven Schicht zu bestimmen und daraus die Temperatur der Verbundscheibe, genauer gesagt des Funktionselements zu bestimmen. Dies ist möglich, da die Impedanz (das Äquivalent des klassischen Ohmschen Widerstands bei Wechselspannungen) temperaturabhängig ist. Insbesondere besteht zwischen dem Realteil der elektrischen Impedanz und der Temperatur des Funktionselementes ein injektiver Zusammenhang. Auf diese Weise kann jeder Impedanz eine Temperatur zugeordnet werden. Insbesondere ist der

Realteil der Impedanz als Funktion der Temperatur streng monoton fallend. Die Ausgestaltung hat den Vorteil, dass auf einen Temperatursensor verzichtet werden kann, der als weiteres Bauteil integriert werden muss und daher den Aufbau verkompliziert und die Herstellungskosten erhöht. Das Verfahren wird derart ausgeführt, dass die Steuereinheit die Impedanz der aktiven Schicht bestimmt und daraus die Temperatur der Verbundscheibe bestimmt beziehungsweise abschätzt. Dazu wird insbesondere eine Spannung angelegt und der daraus resultierende Stromfluss bestimmt. Die Impedanz kann berechnet werden als Quotient aus der Spannung und dem Stromfluss. In der Steuereinheit sind Kalibrationsdaten, beispielsweise eine Kalibrationskurve oder -tabelle, hinterlegt, welche die Temperaturabhängigkeit der Impedanz (genauer gesagt des Realteils der Impedanz) beschreibt (Impedanz als Funktion der Temperatur oder Temperatur als Funktion der Impedanz). Durch einen Abgleich des Betrags der gemessenen Impedanz mit den Kalibrationsdaten kann die Steuereinheit die Temperatur näherungsweise bestimmen.

Zur Bestimmung der Impedanz bestehen grundsätzlich verschiedene Möglichkeiten, insbesondere hinsichtlich der Messung der Leistungsaufnahme. Da die Steuereinheit mindestens einen Wechselrichter umfasst, der eine eingehende Gleichspannung in eine ausgehende Wechselspannung wandelt, kann der Ausgangsstrom des Wechselrichters gemessen werden (nicht beansprucht). Problematisch dabei ist, dass sich der so ermittelte Strom ("Scheinstrom" oder auch "Gesamtstrom") aus zwei Anteilen zusammensetzt, nämlich dem Blindstrom (bildlich ausgedrückt hervorgerufen durch das "Hin- und Herschieben" von Elektronen infolge der Wechselspannung und des kapazitiv wirkenden Funktionselementes) und dem Wirkstrom (hervorgerufen durch parasitäre Verluste in den Zuleitungen sowie in dem Funktionselement). Für die Bestimmung der Impedanz (genauer gesagt deren Realteil) ist aber lediglich der Wirkstrom entscheidend. Der Wirkanteil des gemessenen Stromes (Wirkstrom) muss dann durch die Steuereinheit aus dem Gesamtstrom herausgerechnet werden, beispielsweise durch Ermittlung der Phasenverschiebung zwischen Spannung und Scheinstrom.

Erfindungsgemäß wird die Impedanz daher aus einer Messung der Stromaufnahme des Wechselrichters bestimmt. Die Steuereinheit ist zu dieser Bestimmung geeignet. Da hier nur Gleichspannungen vorliegen, verschwindet jeglicher Blindstrom im zeitlichen Mittel, sofern er nicht ohnehin von den Zwischenkreiskondensatoren im Wechselrichter abgefangen wurde. Der gemessene Strom kann unter Berücksichtigung eines Verlustfaktors im Wechselrichter entsprechend direkt zur Ermittlung der Impedanz zugrunde gelegt werden. Ein weiterer Vorteil ist, dass diese Strommessung zur Fehlererkennung (Kurzschluss und Überlast) häufig ohnehin vorhanden ist und auf zusätzlichen Bauteilaufwand verzichtet werden kann.

Die vorstehend beschriebenen Möglichkeiten, die Impedanz durch Messung des Ausgangsstroms oder erfindungsgemäß der Stromaufnahme eines Wechselrichters zu bestimmen und daraus die Temperatur zu ermitteln, sind immer anwendbar, wenn eine Steuereinheit mit einem solchen Wechselrichter ausgestattet ist, der eine von einer Gleichspannungsquelle bereitgestellte Gleichspannung (direkt oder indirekt) in eine Wechselspannung wandelt. Die gewandelte Gleichspannung (Eingangssignal des Wechselrichters) kann die Primärspannung sein, welche von der Gleichspannungsquelle bereitgestellt wird (direkte Wandlung). Die gewandelte Gleichspannung kann aber auch eine (insbesondere höhere) Sekundärspannung sein, in welche die besagte Primärspannung zuvor durch einen Gleichspannungswandler gewandelt wurde (indirekte Wandlung).

Ist die Temperatur der Verbundscheibe beziehungsweise des Funktionselements bekannt, so kann durch die Steuereinheit die Spannung (hier Wechselspannung) ermittelt werden, die zum Erreichen eines bestimmten Schaltzustands erforderlich ist. Insbesondere ist die besagte Spannung umso geringer, je höher die Temperatur ist. Hierzu sind wiederum Kalibrationsdaten in der Steuereinheit hinterlegt, beispielsweise Kalibrationskurven oder - tabellen, welche Spannungswerte als Funktion der Temperatur einerseits und des Schaltzustands andererseits beinhalten. So kann von der Steuereinheit in Abhängigkeit des gewünschten Schaltzustands (beispielsweise 50%) und der ermittelten Temperatur (beispielsweise 60°C) der erforderliche Spannungswert ermittelt werden und an die Flächenelektroden des jeweiligen Schaltbereichs angelegt werden.

Die Kalibrationsdaten liegen bevorzugt als kontinuierliche Kalibrationskurven vor, so dass jedem Wertepaar aus Temperatur und Schaltzustand ein Spannungswert zugeordnet wird. Die Kalibrationskurve kann beispielsweise dadurch erstellt werden, dass einzelne Punkte durch Messungen bekannt sind, zwischen denen (beispielsweise linear) interpoliert wird. Grundsätzlich ist es aber auch möglich, dass die Kalibrationsdaten tabellenartig vorliegen, wobei bestimmten Bereichen der Temperatur jeweils ein gemeinsamer Spannungswert zugeordnet wird. Letzteres ist weniger bevorzugt, da beim Übergang vom einen in den anderen Temperaturbereich eine plötzliche Änderung des Schaltverhaltens auftreten kann, was für den Nutzer irritierend ist.

Typischerweise ist die Temperaturabhängigkeit des Schaltverhaltens oberhalb einer bestimmten Grenztemperatur stark ausgeprägt, während die temperaturabhängige Änderung unterhalb der Grenztemperatur vergleichsweise gering ausgeprägt ist. Die Grenztemperatur liegt bei gebräuchlichen Funktionselementen typischerweise bei etwa 60°C. Höhere Temperaturen treten insbesondere bei starker Sonneneinstrahlung auf. Es ist daher in einer Weiterbildung der Erfindung möglich, dass Verfahren derart ausgeführt wird, dass die Temperatur bestimmt wird, und für den Fall, dass die Temperatur kleiner als eine vorher festgelegte Grenztemperatur ist (beispielsweise 50°C oder 60°C), eine temperaturunabhängige Spannung an die Flächenelektroden angelegt wird, während für den Fall, dass die Temperatur größer als die Grenztemperatur ist, eine erfindungsgemäß temperaturabhängige Spannung angelegt wird.

In einer bevorzugten Ausgestaltung ist das Funktionselement ein PDLC-Funktionselement (*polymer dispersed liquid crystal*)*.* Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Es können aber auch andere Funktionselemente verwendet werden, deren Veränderlichkeit der optischen Eigenschaften auf Flüssigkristallen basiert, beispielsweise PNLC-Funktionselemente (*polymer networked liquid crystal*)*.*

In einer weiteren bevorzugten Ausgestaltung ist das Funktionselement ein SPD-Funktionselement (*suspended particle device).* Dabei enthält die aktive Schicht suspendierte Partikel, wobei die Absorption von Licht durch die aktive Schicht mittels Anlegen einer Spannung an die Flächenelektroden veränderbar ist.

In einer weiteren bevorzugten Ausgestaltung ist die aktive Schicht des Funktionselements eine elektrochemisch aktive Schicht. Solche Funktionselemente sind als elektrochrome Funktionselemente bekannt. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid.

Die erwähnten regelbaren Funktionselemente und deren Funktionsweise sind dem Fachmann an sich bekannt, so dass an dieser Stelle auf eine ausführliche Beschreibung verzichtet werden kann.

In einer vorteilhaften Ausgestaltung umfasst das Funktionselement außer der aktiven Schicht und den Flächenelektroden zwei Trägerfolien, wobei die aktive Schicht und die Flächenelektroden bevorzugt zwischen den Trägerfolien angeordnet sind. Die Trägerfolien sind bevorzugt aus thermoplastischem Material ausgebildet, beispielsweise auf Basis von Polyethylenterephthalat (PET), Polypropylen, Polyvinylchlorid, fluorinierte Ethylen-Propylene, Polyvinylfluorid oder Ethylen-Tetrafluorethylen, besonders bevorzugt auf Basis von PET. Die Dicke der Trägerfolien beträgt bevorzugt von 10 µm bis 200 µm. Solche Funktionselemente können vorteilhaft als Mehrschichtfolien bereitgestellt werden, insbesondere käuflich erworben werden, in der gewünschten Größe und Form zurechtgeschnitten werden und dann in die Verbundscheibe einlaminiert werden, bevorzugt über jeweils eine thermoplastische Verbindungsschicht mit der Außenscheibe und der Innenscheibe. Es ist möglich, die erste Flächenelektrode durch Laserstrahlung zu segmentieren, auch wenn sie in einer solche Mehrschichtfolie eingelagert ist. Durch die Laserbearbeitung kann eine dünne, optisch unauffällige Isolierungslinie erzeugt werden, ohne die typischerweise darüber liegende Trägerfolie zu beschädigen.

Die Seitenkante des Funktionselements kann versiegelt werden, beispielsweise durch Verschmelzen der Trägerschichten oder durch ein (bevorzugt polymeres) Band. So kann die aktive Schicht geschützt werden, insbesondere davor, dass Bestandteile der Zwischenschicht (insbesondere Weichmacher) in die aktive Schicht hineindiffundieren, was zu einer Degradation des Funktionselements führen kann.

Zur elektrischen Kontaktierung der Flächenelektroden beziehungsweise Elektrodensegmente sind diese bevorzugt mit sogenannten Flach- oder Folienleitern verbunden, welche sich aus der Zwischenschicht über die Seitenkante der Verbundscheibe hinaus erstrecken. Flachleiter weisen als leitfähigen Kern eine bandartige metallische Schicht auf, welche typischerweise mit Ausnahme der Kontaktflächen von einer polymeren Isolationsummantelung umgeben ist. Optional können sogenannte Sammelleiter (*bus bars*)*,* beispielsweise Streifen einer elektrisch leitfähigen Folie (beispielsweise Kupferfolie) oder elektrisch leitfähige Aufdrucke, auf den Flächenelektroden angeordnet sein, wobei die Flach- oder Folienleiter mit diesen Sammelleitern verbunden sind. Die Flach- oder Folienleiter sind direkt oder über weitere Leiter an die Steuereinheit angeschlossen.

Die Steuereinheit ist in einer vorteilhaften Ausgestaltung an der innenraumseitigen, von der Zwischenschicht abgewandten Oberfläche der Innenscheibe befestigt. Die Steuereinheit kann beispielsweise direkt an die Oberfläche der Innenscheibe angeklebt sein. In einer vorteilhaften Ausgestaltung ist die Steuereinheit in ein Befestigungselement eingesetzt, welches wiederum an der innenraumseitigen Oberfläche der Innenscheibe befestigt ist, bevorzugt über eine Schicht eines Klebstoffs. Solche Befestigungselemente sind im Fahrzeugbereich auch als "Brackets" bekannt und typischerweise aus Kunststoff gefertigt. Durch die Anbringung der Steuereinheit direkt an der Verbundscheibe wird der elektrische Anschluss derselben erleichtert. Insbesondere sind keine langen Kabel zwischen Steuereinheit und Funktionselement erforderlich.

Alternativ ist es aber auch möglich, dass die Steuereinheit nicht an der Verbundscheibe befestigt ist, sondern beispielsweise im elektrische System des Fahrzeugs integriert ist oder an der Fahrzeugkarosserie befestigt ist, falls die Verbundscheibe eine Fahrzeugscheibe ist. Die Steuereinheit ist bevorzugt im Innenraum des Fahrzeugs derart angeordnet, dass sie nicht sichtbar ist, beispielsweise im Armaturenbrett oder hinter einer Wandverkleidung.

Der Verbundscheibe kann mit einem opaken Abdeckdruck ausgestattet sein, insbesondere in einem umlaufenden Randbereich, wie es im Fahrzeugbereich insbesondere für Windschutzscheiben, Heckscheiben und Dachscheiben üblich ist. Der Abdeckdruck ist typischerweise aus einer Emaille gebildet, enthaltend Glasfritten und ein Pigment, insbesondere Schwarzpigment. Die Druckfarbe wird typischerweise im Siebdruckverfahren aufgebracht und eingebrannt. Ein solcher Abdeckdruck ist auf mindestens einer der Scheibenoberflächen aufgebracht, bevorzugt der innenraumseitigen Oberfläche der Außenscheibe und/oder der Innenscheibe. Der Abdeckdruck umgibt bevorzugt einen zentralen Durchsichtsbereich rahmenartig und dient insbesondere dem Schutz des Klebstoffs, durch den die Verbundscheibe mit der Fahrzeugkarossierie verbunden ist, vor UV-Strahlung. Ist die Steuereinheit an der innenraumseitigen Oberfläche der Innenscheibe angebracht, dann bevorzugt im opaken Bereich des Abdeckdrucks.

Die thermoplastische Zwischenschicht dient der Verbindung der beiden Scheiben, wie es bei Verbundscheiben üblich ist. Typischerweise werden thermoplastische Folien verwendet und die Zwischenschicht aus diesen ausgebildet. In einer bevorzugten Ausgestaltung ist die Zwischenschicht zumindest aus einer ersten thermoplastischen Schicht und einer zweiten thermoplastischen Schicht gebildet, zwischen denen das Funktionselement angeordnet ist. Das Funktionselement ist dann über einen Bereich der ersten thermoplastischen Schicht mit der Außenscheibe und über einen Bereich der zweiten thermoplastischen Schicht mit der Innenscheibe verbunden. Bevorzugt ragen die thermoplastischen Schichten umlaufend über das Funktionselement hinaus. Dort wo die thermoplastischen Schichten direkten Kontakt miteinander haben und nicht durch das Funktionselement voneinander getrennt sind, können sie beim Laminieren derart verschmelzen, dass die ursprünglichen Schichten unter Umständen nicht mehr erkennbar sind und stattdessen eine homogene Zwischenschicht vorliegt.

Eine thermoplastische Schicht kann beispielsweise durch eine einzige thermoplastische Folie ausgebildet werden. Eine thermoplastische Schicht kann auch aus Abschnitten unterschiedlicher thermoplastischer Folien gebildet werden, deren Seitenkanten aneinandergesetzt sind.

In einer bevorzugten Ausgestaltung ist das Funktionselement, genauer die Seitenkanten des Funktionselements umlaufend von einer dritten thermoplastischen Schicht umgeben. Die dritte thermoplastische Schicht ist rahmenartig ausgebildet mit einer Aussparung, in welche das Funktionselement eingelegt wird. Die dritte thermoplastische Schicht kann durch eine thermoplastische Folie gebildet werden, in welche die Aussparung durch Ausschneiden eingebracht worden ist. Alternativ kann die dritte thermoplastische Schicht auch aus mehreren Folienabschnitten um das Funktionselement zusammengesetzt werden. Die Zwischenschicht ist dann aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte thermoplastische Schicht zwischen der ersten und der zweiten thermoplastischen Schicht angeordnet, wobei die Seitenkanten aller thermoplastischen Schichten bevorzugt in Deckung befindlich sind. Die dritte thermoplastische Schicht weist bevorzugt etwa die gleiche Dicke auf wie das Funktionselement. Dadurch wird der lokale Dickenunterschied, der durch das örtlich begrenzte Funktionselement eingebracht wird, kompensiert, so dass Glasbruch beim Laminieren vermieden werden kann und ein verbessertes optisches Erscheinungsbild entsteht.

Die Schichten der Zwischenschicht sind bevorzugt aus demselben Material ausgebildet, können prinzipiell aber auch aus unterschiedlichen Materialien ausgebildet sein. Die Schichten beziehungsweise Folien der Zwischenschicht sind bevorzugt auf Basis von Polyvinylbutyral (PVB), Ethylenvinylacetat (EVA), oder Polyurethan (PU). Das bedeutet, dass die Schicht beziehungsweise Folie mehrheitlich das besagte Material enthält (Anteil von größer als 50 Gew.-%) und daneben optional weitere Bestandteile enthalten kann, beispielsweise Weichmacher, Stabilisatoren, UV- oder IR-Absorber. Die Dicke jeder thermoplastischen Schicht beträgt bevorzugt von 0,2 mm bis 2 mm, besonders bevorzugt von 0,3 mm bis 1 mm. Beispielsweise können Folien mit den Standarddicken von 0,38 mm oder 0,76 mm verwendet werden.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Aluminosilikatglas, oder aus starren klaren Kunststoffen, beispielsweise Polycarbonat oder Polymethylmethacrylat. Die Scheiben können klar sein oder auch getönt oder gefärbt. Je nach Anwendungsfall können dem Grad der Tönung oder Färbung Grenzen gesetzt sein: so muss mitunter eine vorgeschriebene Lichttransmission gewährleistet sein, beispielsweise eine Lichttransmission von mindestens 70 % im Haupt-Durchsichtbereich A gemäß der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge").

Die Außenscheibe, die Innenscheibe und/oder die Zwischenschicht können geeignete, an sich bekannte Beschichtungen aufweisen, beispielsweise Antireflexbeschichtungen, Antihaftbeschichtungen, Antikratzbeschichtungen, photokatalytische Beschichtungen, UVabsorbierende oder reflektierende Beschichtungen oder IR-absorbierende oder - reflektierende Beschichtungen wie Sonnenschutzbeschichtungen oder Low-E-Beschichtungen.

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem die Verwendung einer erfindungsgemäßen Verglasungseinheit, insbesondere der Verbundscheibe einer erfindungsgemäßen Verglasungseinheit, in Gebäuden oder in Fortbewegungsmitteln für den Verkehr auf dem Lande, in der Luft oder zu Wasser, bevorzugt als Fensterscheibe eines Fahrzeugs, insbesondere eines Kraftfahrzeugs. Die Verglasungseinheit kann beispielweise verwendet werden als Windschutzscheibe, Dachscheibe, Rückwandscheibe oder Seitenscheibe.

In einer besonders bevorzugten Ausgestaltung ist die Verglasungseinheit beziehungsweise die Verbundscheibe eine Windschutzscheibe eines Fahrzeugs. Das Funktionselement wird dabei bevorzugt als elektrisch steuerbare Sonnenblende eingesetzt, welche in einem oberen Bereich der Windschutzscheibe angeordnet ist, während der Großteil der Windschutzscheibe nicht mit dem Funktionselement versehen ist. Die Schaltbereiche sind bevorzugt im Wesentlichen parallel zur Oberkante der Windschutzscheibe mit wachsendem Abstand zu dieser angeordnet. Durch die unabhängig schaltbaren Schaltbereiche kann der Benutzer in Abhängigkeit vom Sonnenstand das Ausmaß des an die Oberkante grenzenden Bereichs bestimmen, der abgedunkelt oder mit einer hohen Lichtstreuung versehen werden soll, um eine Blendwirkung durch die Sonne zu vermeiden.

In einer weiteren bevorzugten Ausgestaltung ist die Verglasungseinheit beziehungsweise die Verbundscheibe eine Dachscheibe eines Fahrzeugs. Das Funktionselement ist dabei bevorzugt im gesamten Durchsichtbereich der Verbundscheibe angeordnet. In einer typischen Ausgestaltung umfasst dieser Durchsichtbereich die gesamte Verbundscheibe abzüglich eines umlaufenden Randbereichs, der mit einem opaken Abdeckdruck auf mindestens einer der Oberfläche der Scheiben versehen ist. Das Funktionselement erstreckt sich über den gesamten Durchsichtbereich, wobei seine Seitenkanten im Bereich des opaken Abdeckdrucks angeordnet und dadurch für den Betrachter nicht sichtbar sind. Die Schaltbereiche sind bevorzugt im Wesentlichen parallel zur Vorderkante der Dachscheibe mit wachsendem Abstand zu dieser angeordnet. Durch die unabhängig schaltbaren Schaltbereiche kann der Benutzer festlegen, welche Bereich der Dachscheibe transparent sein sollen und welche abgedunkelt oder mit einer hohen Lichtstreuung versehen werden sollen, beispielsweise in Abhängigkeit vom Sonnenstand, um eine übermäßige Erwärmung des Fahrzeuginnenraums zu vermeiden. Es ist auch möglich, dass jedem Fahrzeuginsassen, also beispielsweise dem Fahrer, dem Beifahrer, dem linken und dem rechten hinteren Insassen, jeweils ein über ihm befindlicher Schaltbereich zugeordnet ist.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung der erfindungsgemäßen Verglasungseinheit,
- Fig. 2: einen Querschnitt durch die Verglasungseinheit aus Figur 1,
- Fig. 3: eine vergrößerte Darstellung des Bereichs Z aus Figur 2,
- Fig. 4: das Funktionselement der Verglasungseinheit aus Figur 1 in einem Ersatzschaltbild,
- Fig. 5: drei schematische Ausgestaltungen der Steuereinheit einer erfindungsgemäßen Verglasungseinheit und
- Fig. 6: ein Diagramm der Leistungsaufnahme in Abhängigkeit von der Temperatur eines elektrisch steuerbaren Funktionselements 4.

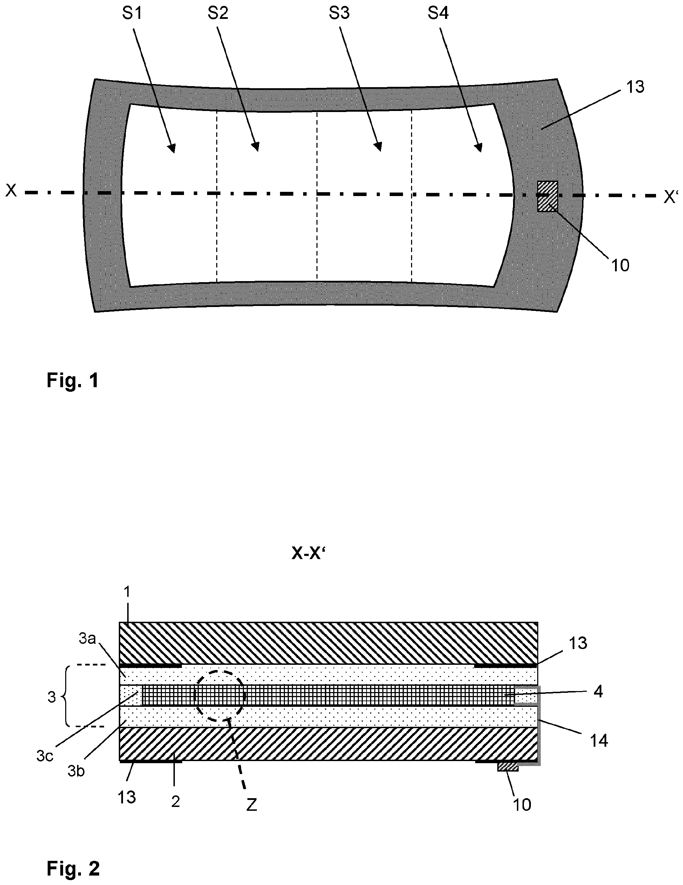

Figur 1, Figur 2, Figur 3 und Figur 4 zeigen je ein Detail einer erfindungsgemäßen Verglasungseinheit mit elektrisch steuerbaren optischen Eigenschaften. Die Verglasungseinheit umfasst eine Verbundscheibe, die beispielhaft als Dachscheibe eines Personenkraftwagens vorgesehen ist, deren Lichttransmission bereichsweise elektrisch gesteuert werden kann. Die Verbundscheibe umfasst eine Außenscheibe 1 und eine Innenscheibe 2, die über eine Zwischenschicht 3 miteinander verbunden sind. Die Außenscheibe 1 und die Innenscheibe 2 bestehen aus Kalk-Natron-Glas, welches optional getönt sein kann. Die Außenscheibe 1 weist beispielsweise eine Dicke von 2,1 mm auf, die Innenscheibe 2 eine Dicke von 1,6 mm.

Die Zwischenschicht 3 umfasst insgesamt drei thermoplastischen Schichten 3a, 3b, 3c, die jeweils durch eine thermoplastische Folie mit einer Dicke von 0,38 mm aus PVB ausgebildet sind. Die erste thermoplastische Schicht 3a ist mit der Außenscheibe 1 verbunden, die zweite thermoplastische Schicht 3b mit der Innenscheibe 2. Die dazwischenliegende dritte thermoplastische Schicht 3c weist einen Ausschnitt auf, in welchen ein Funktionselement 4 mit elektrisch steuerbaren optischen Eigenschaften im Wesentlichen passgenau, das heißt an allen Seiten etwa bündig, eingelegt ist. Die dritte thermoplastische Schicht 3c bildet also gleichsam eine Art Passepartout oder Rahmen für das etwa 0,4 mm dicke Funktionselement 4, welches somit rundum in thermoplastisches Material eingekapselt und dadurch geschützt ist. Das Funktionselement 4 ist beispielsweise eine PDLC-Mehrschichtfolie, die von einem klaren, transparenten Zustand in einen trüben, nicht-transparenten (diffusen) Zustand geschaltet werden kann. Das Funktionselement 4 ist eine Mehrschichtfolie, bestehend aus einer aktiven Schicht 5 zwischen zwei Flächenelektroden 8, 9 und zwei Trägerfolien 6, 7. Die aktive Schicht 5 enthält eine Polymermatrix mit darin dispergierten Flüssigkristallen, die sich in Abhängigkeit der an die Flächenelektroden 8, 9 angelegten elektrischen Spannung ausrichten, wodurch die optischen Eigenschaften geregelt werden können. Die Trägerfolien 6, 7 bestehen aus PET und weisen eine Dicke von beispielsweise 0,125 mm auf. Die Trägerfolien 6, 7 sind mit einer zur aktiven Schicht 5 weisenden Beschichtung aus ITO mit einer Dicke von etwa 100 nm versehen, welche die Flächenelektroden 8, 9 ausbilden. Die Flächenelektroden 8, 9 sind über nicht dargestellte Sammelleiter (beispielweise ausgebildet aus Streifen einer Kupferfolie) mit elektrischen Kabeln 14 verbunden, welche die elektrische Verbindung zu einer Steuereinheit 10 herstellen.

Diese Steuereinheit 10 ist beispielhaft an der innenraumseitigen, von der Zwischenschicht 3 abgewandten Oberfläche der Innenscheibe 2 angebracht. Dazu ist beispielsweise ein nicht dargestelltes Befestigungselement an die Innenscheibe 2 angeklebt, in welches die Steuereinheit 10 eingesetzt ist. Die Steuereinheit 10 muss aber nicht zwingend direkt an der Verbundscheibe angebracht sein. Sie kann alternativ beispielsweise am Armaturenbrett oder der Fahrzeugkarosserie angebracht sein oder in die Bordelektrik des Fahrzeugs integriert sein.

Die Verbundscheibe weist einen umlaufenden Randbereich auf, welche mit einem opaken Abdeckdruck 13 versehen ist. Diese Abdeckdruck 13 ist typischerweise aus einer schwarzen Emaille ausgebildet. Sie wird als Druckfarbe mit einem Schwarzpigment und Glasfritten im Siebdruckverfahren aufgedruckt und in die Scheibenoberfläche eingebrannt. Der Abdeckdruck 13 ist beispielhaft auf der innenraumseitigen Oberfläche der Außenscheibe 1 und auch auf der innenraumseitigen Oberfläche der Innenscheibe 2 aufgebracht. Die Seitenkanten des Funktionselements 4 sind durch diesen Abdeckdruck 13 verdeckt. Die Steuereinheit 10 ist in diesem opaken Randbereich angeordnet, also auf den Abdeckdruck 13 der Innenscheibe 2 aufgeklebt. Dort stört die Steuereinheit 10 die Durchsicht durch die Verbundscheibe nicht und ist optisch unauffällig. Zudem weist sie einen geringen Abstand zur Seitenkante der Verbundscheibe auf, so dass nur vorteilhaft kurze Kabel 14 zum elektrischen Anschluss des Funktionselements 14 nötig sind.

Die Steuereinheit 10 ist andererseits mit der Bordelektrik des Fahrzeugs verbunden, was in den Figuren 1 und 2 der Einfachheit halber nicht dargestellt ist. Die Steuereinheit 10 ist geeignet, in Abhängigkeit von einem Schaltsignal, welches der Fahrer beispielsweise mit einem Knopfdruck vorgibt, die Spannung an die Flächenelektroden 8, 9 des Funktionselements 4 anzulegen, welche für den gewünschten optischen Zustand des Funktionselements 4 (Schaltzustand) erforderlich ist.

Der Verbundscheibe weist beispielhaft vier unabhängige Schaltbereiche S1, S2, S3, S4 auf, in denen der Schaltzustand des Funktionselements 4 unabhängig voneinander durch die Steuereinheit 10 eingestellt werden kann. Die Schaltbereiche S1, S2, S3, S4 sind in der Richtung von der Vorderkante zur Hinterkante der Dachscheibe hintereinander angeordnet, wobei die Begriffe Vorderkante und Hinterkante auf die Fahrtrichtung des Fahrzeugs bezogen sind. Durch die Schaltbereiche S1, S2, S3, S4 kann der Fahrer des Fahrzeugs (beispielsweise in Abhängigkeit vom Sonnenstand) wählen, statt der gesamten Verbundscheibe nur einen Bereich derselben mit dem diffusen Zustand zu versehen, während die anderen Bereiche transparent bleiben.

Um die Schaltbereiche S1, S2, S3, S4 auszubilden, ist die erste Flächenelektrode 8 durch drei Isolierungslinien 8' unterbrochen, welche im Wesentlichen parallel zueinander angeordnet sind und sich von einer Seitenkante zur gegenüberliegenden Seitenkante des Funktionselements 4 erstrecken. Die Isolierungslinien 8' sind typischerweise durch Laserbearbeitung in die erste Flächenelektrode 8 eingebracht und teilt diese in vier stofflich voneinander getrennte Elektrodensegmente 8.1, 8.2, 8.3 und 8.4 auf. Jedes Elektrodensegment 8.1, 8.2, 8.3 und 8.4 ist unabhängig von den anderen mit der Steuereinheit 10 verbunden. Die Steuereinheit ist geeignet, unabhängig voneinander eine elektrische Spannung zwischen jedem Elektrodensegment 8.1, 8.2, 8.3 und 8.4 der ersten Flächenelektrode 8 einerseits und der zweiten Flächenelektrode 9 andererseits anzulegen, so dass der dazwischen befindliche Abschnitt der aktiven Schicht 5 mit der erforderlichen Spannung beaufschlagt wird, um einen gewünschten Schaltzustand zu erreichen.

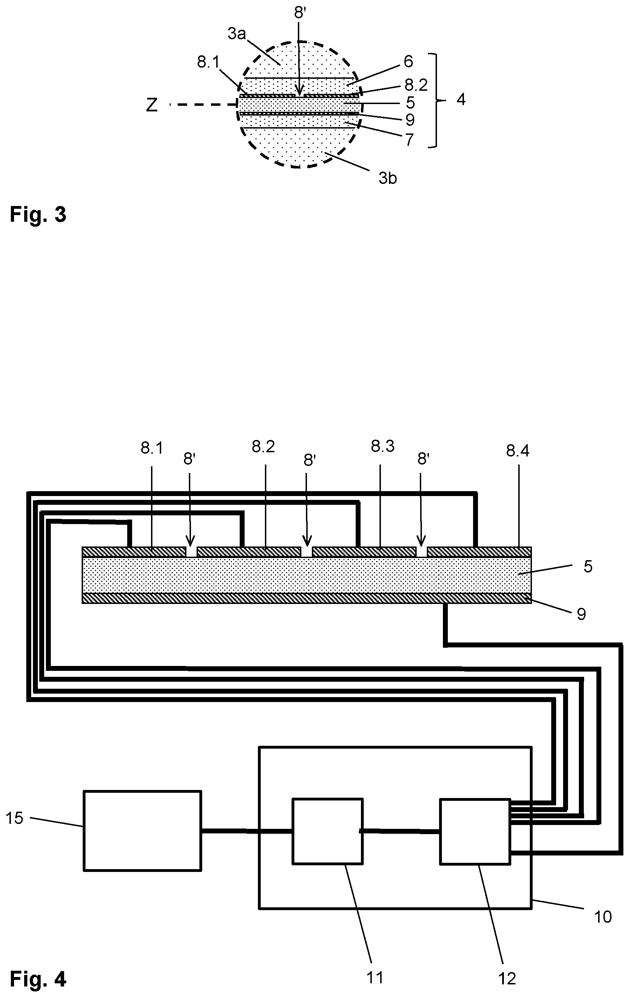

Wie im Ersatzschaltbild der Figur 4 veranschaulicht, ist die Steuereinheit 10 über die Bordelektrik des Fahrzeugs an eine Spannungsquelle 15 angeschlossen. Die Spannungsquelle 15 stellt im Fahrzeugbereich typischerweise eine Gleichspannung im Bereich von 12 V bis 14 V bereit (Bordspannung des Fahrzeugs). Die Steuereinheit 10 ist mit einem Gleichspannungswandler 11 ausgestattet, welcher die Bordspannung (Primärspannung) in eine Gleichspannung mit höherem Betrag wandelt, beispielsweise 65 V (Sekundärspannung). Die Sekundärspannung muss ausreichend hoch sein, um einen Schaltzustand des Funktionselements 4 von 100% zu realisieren. Die Steuereinheit 10 ist darüber hinaus mit einem Wechselrichter 12 ausgestattet, der die Sekundärspannung in eine Wechselspannung wandelt. Ein Pol des Wechselrichters 12 ist mit der zweiten Flächenelektrode 9 verbunden. Für den anderen Pol weist der Wechselrichter 12 mehrere unabhängige Ausgänge auf, wobei jedes welche jeweils mit einem Elektrodensegment 8.1, 8.2, 8.3 und 8.4 mit einem der unabhängigen Ausgänge verbunden ist, so dass der Schaltzustand des zugehörigen Schaltbereichs S1, S2, S3, S4 unabhängig von den anderen eingestellt werden kann.

Bei einem Schaltzustand von 0% weisen die Elektrodensegmente 8.1, 8.2, 8.3, 8.4 und die zweite Flächenelektrode 9 stets das gleiche elektrische Potential auf, so dass keine Spannung anliegt. Bei einem Schaltzustand größer 0% eines Schaltbereichs S1, S2, S3, S4 liegt eine Spannung zwischen dem zugehörigen Elektrodensegment 8.1, 8.2, 8.3, 8.4 und der zweiten Flächenelektrode 9 an. Infolge der Spannung fließt ein Strom durch den zugehörigen Abschnitt der aktiven Schicht 5. Da die als Flächenelektroden 8, 9 fungierenden ITO-Schichten einen vergleichsweise hohen elektrischen Widerstand aufweisen, führt dieser Stromfluss zu einer Potentialverschiebung der zweiten Flächenelektrode 9. Dies hat nun zur Folge, dass in Schaltbereichen S1, S2, S3, S4, die eigentlich einen spannungsfreien Schaltzustand von 0% aufweisen sollen, eine gewisse Spannung erzeugt wird, so dass in dem betreffenden Schaltbereich ein endlicher Schaltzustand größer 0% erzeugt wird, der eigentlich nicht erwünscht ist. Man spricht in diesem Fall von einer Kommunikation (Übersprechen, "Cross Talk") zwischen den Schaltbereichen S1, S2, S3, S4.

Der Effekt des "Cross Talk" fällt bei höheren Temperaturen stärker auf, da zum einen die Empfindlichkeit des Funktionselements 4 gegenüber kleinen Spannungen steigt und zum anderen die Leitfähigkeit der Flächenelektroden 8, 9 abnimmt (ihr Widerstand steigt), wodurch der entstehende Spannungsabfall größer ist. Typischerweise fällt der "Cross Talk" insbesondere bei Temperaturen oberhalb 60°C besonders störend auf. Es ist außerdem leicht verständlich, dass der "Cross Talk" umso störender ist, je mehr Schaltbereiche S1, S2, S3, S4 aktiviert sind, also bewusst mit einer Spannung beaufschlagt sind, um einen endlichen Schaltzustand zu erzeugen, da dann der Stromfluss durch mehrere Schaltbereiche erfolgt und dadurch stärker ist, so dass die Potentialverschiebung der zweiten Flächenelektrode 9 stärker ausgeprägt ist. Ebenso ist der "Cross Talk" umso ausgeprägter, je höher der Schaltzustand des oder der aktivierten Schaltbereiche ist.

Eine höhere Temperatur führt andererseits aber auch dazu, dass eine geringere Spannung erforderlich ist, um einen gewünschten Schaltzustand zu erreichen. Dieser Effekt wird erfindungsgemäß dadurch ausgenutzt, dass an die Flächenelektroden 8, 9 eine Spannung angelegt wird, deren Betrag abhängig von der Temperatur ist. Dazu wird zunächst die Temperatur der Verbundscheibe beziehungsweise des Funktionselements 4 ermittelt. Auf Grundlage von Kalibrationsdaten ermittelt die Steuereinheit 10 daraufhin die Spannung, welche bei gegebener Temperatur erforderlich ist, um den vom Nutzer eingestellten Schaltzustand zu erreichen. Diese Spannung wird dann an den betreffenden Schaltbereich angelegt. Der Vorteil liegt zum einen darin, dass auch Schaltzustände kleiner 100% sehr präzise eingestellt werden können, zum anderen darin, dass die angelegte Spannung minimal gewählt ist hinsichtlich des Schaltzustandes, wodurch der störende Effekt des "Cross Talk" ebenfalls minimiert wird. Die Steuereinheit ist mit den erforderlichen Bauteilen ausgestattet, die nicht dargestellt sind, insbesondere einem Datenspeicher zum Hinterlegen der Kalibrationsdaten und einem Prozessor zur Durchführung der erforderlichen Rechenoperationen und zum Steuern der einzelnen Ausgänge des Wechselrichters, mit denen die unterschiedlichen Elektrodensegmente 8.1, 8.2, 8.3, 8.4 angesteuert werden.

Zur Ermittlung der Temperatur kann die Verbundscheibe grundsätzlich mit einem Temperatursensor ausgestattet sein, welcher die gemessene Temperatur an die Steuereinheit übermittelt (nicht beansprucht). Auf einen Temperatursensor kann verzichtet werden, wenn die Temperatur des Funktionselements 4 näherungsweise auf Grundlage der Impedanz der aktiven Schicht 5 abgeschätzt wird. Eine angelegte Spannung führt zu einem Stromfluss durch die aktive Schicht 5, dessen Ausmaß von der temperaturabhängigen elektrischen Impedanz abhängt. Wird bei einer angelegten Spannung die Stromaufnahme bestimmt, so kann daraus der Stromfluss beziehungsweise die Impedanz der aktiven Schicht 5 und daraus wiederum die Temperatur näherungsweise ermittelt werden. In der Steuereinheit 10 sind dazu Kalibrationsdaten hinterlegt, welche die Impedanz der aktiven Schicht 5 mit der Temperatur verknüpfen.

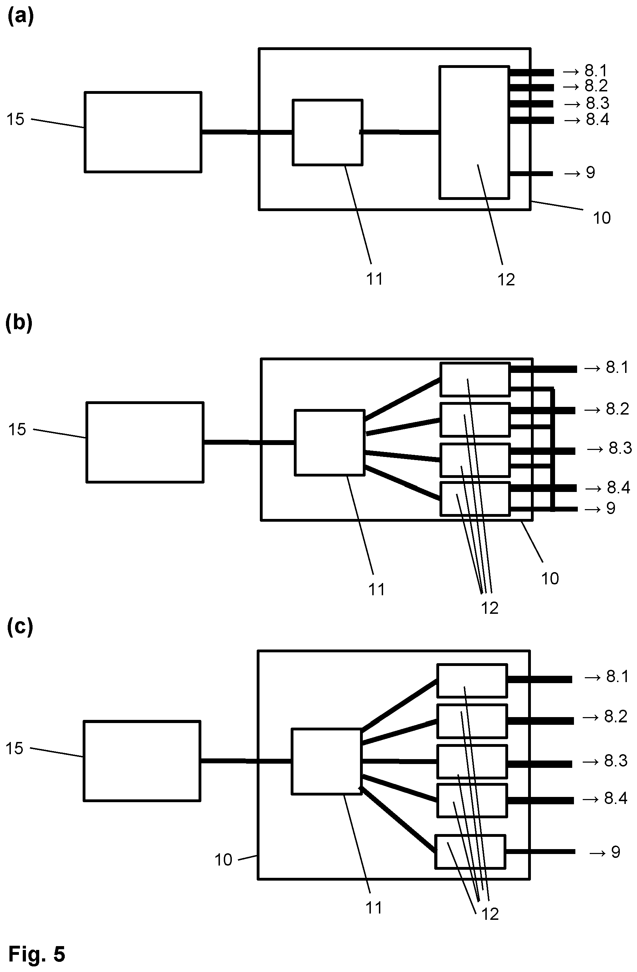

Figur 5 zeigt schematische Ersatzschaltbilder der an die Gleichspannungsquelle 15 angeschlossenen Steuereinheit 10 in drei Ausgestaltungen. Die Anschlüsse an die Elektrodensegmente 8.1, 8.2, 8.3, 8.4 und an die zweite Flächenelektrode 9 sind der Einfachheit halber durch Pfeile symbolisiert, das Funktionselement 4 selbst nicht gezeigt.

In der Ausgestaltung der Figur 5a weist die Steuereinheit 10 einen einzelnen Wechselrichter 12 auf, der einerseits an die zweiten Flächenelektrode 9 und andererseits über separate Ausgänge an die Elektrodensegmente 8.1, 8.2, 8.3, 8.4 angeschlossen ist. Diese Ausgestaltung entspricht derjenigen nach Figur 4. Die Ausgänge sind typischerweise als Schalter ausgebildet, durch die das Signal auf die Elektrodensegmente 8.1, 8.2, 8.3, 8.4 aufgeteilt wird. Die Schalter müssen nicht unbedingt im Wechselrichter 12 integriert sein, wie in der Figur angedeutet, sondern können auch als externe Bauteile an diesen angeschlossen sein. Durch den einzelnen Wechselrichter 12 ist die Steuereinheit technisch einfach aufgebaut, kostengünstig und platzsparend. Dafür sind die Schaltbereiche S1, S2, S3, S4 nicht völlig unabhängig voneinander steuerbar. Stattdessen kann jeder Schaltbereich S1, S2, S3, S4 nur zwischen einem Schaltzustand von 0% und einem Schaltzustand X geschaltet werden, wobei X für alle Schaltbereiche S1, S2, S3, S4 gleich ist.

In der Ausgestaltung der Figur 5b weist die Steuereinheit 10 vier Wechselrichter 12 auf. Jeder Wechselrichter 12 ist einerseits an die zweite Flächenelektrode 9 und andererseits an jeweils eines der Elektrodensegmente 8.1, 8.2, 8.3, 8.4 angeschlossen. Hier sind die Schaltbereiche S1, S2, S3, S4 völlig unabhängig voneinander steuerbar, so dass beispielsweise der Schaltbereich S1 einen Schaltzustand von 100 % aufweisen kann, der Schaltbereich S2 einen Schaltzustand von 50 % und die Schaltbereiche S3, S4 einen Schaltzustand von 0%.

In den Ausgestaltungen der Figuren 5a und 5b ist es erforderlich, dass der oder die Wechselrichter 12 eine echte Wechselspannung erzeugen, einschließlich der negativen Anteile, was technisch vergleichsweise aufwändig ist. Figur 5c zeigt dagegen eine Ausgestaltung, bei der eine Wechselspannung gleichsam simuliert wird. Die Steuereinheit 10 weist fünf Wechselrichter 12 auf, wobei vier der Wechselrichter 12 an jeweils eines der Elektrodensegmente 8.1, 8.2, 8.3, 8.4 angeschlossen ist und der fünfte Wechselrichter 12 an die zweite Flächenelektrode 9. Die Potentiale der Wechselrichter 12 werden mit einer veränderlichen Funktion moduliert, beispielsweise einer Sinusfunktion, wobei die Potentiale der Wechselrichter 12, die den Elektrodensegmenten 8.1, 8.2, 8.3, 8.4 zugeordnet sind, in Phase sind und das Potential des Wechselrichters 12, der der zweiten Flächenelektrode 9 zugeordnet ist, dazu um 180° phasenverschoben ist. So wird eine zeitlich veränderliche, periodische Potentialdifferenz erzeugt, mit abwechselnd relativ positiven und relativ negativen Beiträgen, was einer Wechselspannung entspricht.

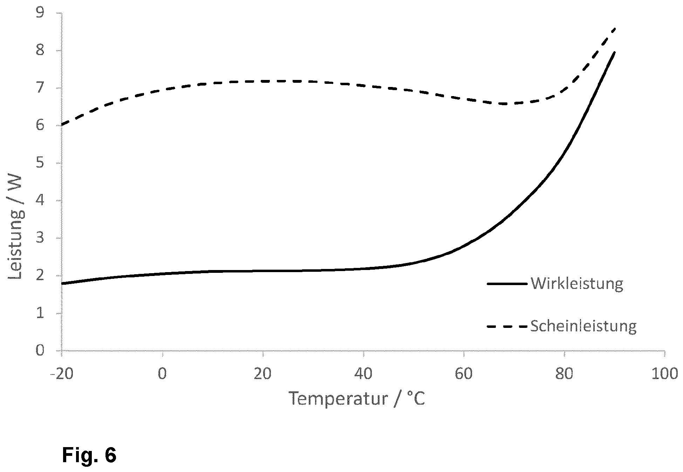

Figur 6 zeigt ein Diagramm der Leistungsaufnahme aufgetragen gegen die Temperatur für ein beispielhaftes PDLC-Funktionselement 4. Die Leistungsaufnahme wird hier als Maß für die Stromaufnahme verwendet. Es sind sowohl die Scheinleistung (zurückgehend auf den Scheinstrom) als auch die Wirkleistung (zurückgehend auf den Wirkstrom) aufgetragen. Die Scheinleistung setzt sich zusammen aus Wirkleistung und Blindleistung. Es ist zu erkennen, dass die Scheinleistung (beziehungsweise der Scheinstrom) nicht zur Bestimmung einer Temperatur geeignet ist, weil ihr temperaturabhängige Kurve keiner ein-eindeutigen Funktion entspricht: der gleiche Leistungswert (beziehungsweise Stromwert) kann bei mehr als einer Temperatur auftreten. Dagegen wird die Wirkleistung (beziehungsweise der Wirkstrom) von einer ein-eindeutigen Funktion beschrieben. Sie lässt sich daher gut zur Ermittlung der Temperatur heranziehen.

Aus einer Messung des Ausgangsstroms des Wechselrichters 12 ergibt sich der Scheinstrom (hier ausgedrückt durch die Scheinleistung). Auch eine solche Messung kann zur Temperaturbestimmung herangezogen werden, wenn aus dem Scheinstrom nachträglich der Blindstrom herausgerechnet wird, um den Wirkstrom zu ermitteln (nicht beansprucht). Vorteilhafter ist jedoch der erfindungsgemäße Ansatz, die Stromaufnahme des Wechselrichters 12 zu messen. Diese entspricht - nach einer Korrektur der als linear anzunehmenden Verlustströme im Wechselrichter - direkt dem Wirkstrom (hier ausgedrückt durch die Wirkleistung).

Aus dem Diagramm ist außerdem ersichtlich, dass die Stromaufnahme (hier ausgedrückt durch die Leistungsaufnahme) und damit die Impedanz erst ab einer bestimmten Grenztemperatur von etwa 60°C stark temperaturabhängig ist, während die temperaturabhängige Änderung unterhalb der Grenztemperatur vergleichsweise gering ausgeprägt ist. Es ist daher denkbar, dass erfindungsgemäße Verfahren derart ausgeführt wird, dass die Temperatur bestimmt wird, und für den Fall, dass die Temperatur kleiner als eine vorher festgelegte Grenztemperatur ist, eine temperaturunabhängige Spannung an die Flächenelektroden 8, 9 angelegt wird, während für den Fall, dass die Temperatur größer als die Grenztemperatur ist, eine erfindungsgemäß temperaturabhängige Spannung angelegt wird. Die Grenztemperatur kann beispielsweise 40 °C, 50 °C oder 60 °C betragen.

### Bezugszeichenliste:

(S1, S2, S3, S4) unabhängige Schaltbereiche der Verglasungseinheit
(1) Außenscheibe
(2) Innenscheibe
(3) thermoplastische Zwischenschicht
(3a) erste Schicht der Zwischenschicht 3
(3b) zweite Schicht der Zwischenschicht 3
(3c) dritte Schicht der Zwischenschicht 3
(4) Funktionselement mit elektrisch steuerbaren optischen Eigenschaften
(5) aktive Schicht des Funktionselements 4
(6) erste Trägerfolie des Funktionselements 4
(7) zweite Trägerfolie des Funktionselements 4
(8) erste Flächenelektrode des Funktionselements 4
(8.1, 8.2, 8.3, 8.4) Elektrodensegmente der ersten Flächenelektrode 8
(8') Isolierungslinie zwischen zwei Elektrodensegmenten 8.1, 8.2, 8.3, 8.4
(9) zweite Flächenelektrode des Funktionselements 4
(10) Steuereinheit
(11) Gleichspannungswandler
(12) Wechselrichter
(13) Abdeckdruck
(14) elektrische Kabel
(15) Spannungsquelle / Gleichspannungsquelle
X-X' Schnittlinie
Y vergrößerter Bereich

## Patentansprüche

1. Verglasungseinheit mit elektrisch steuerbaren optischen Eigenschaften mit mehreren unabhängigen Schaltbereichen (S1, S2, S3, S4), umfassend
- eine Verbundscheibe, umfassend
- eine Außenscheibe (1) und eine Innenscheibe (2), die über eine thermoplastische Zwischenschicht (3) miteinander verbunden sind,
- ein elektrisch steuerbares Funktionselement (4), welches zwischen der Außenscheibe (1) und der Innenscheibe (2) angeordnet ist und eine aktive Schicht (5) mit elektrisch steuerbaren optischen Eigenschaften zwischen einer ersten Flächenelektrode (8) und einer zweiten Flächenelektrode (9) aufweist,
- eine Steuereinheit (10), welche geeignet ist, die optischen Eigenschaften des Funktionselements (4) zu steuern,
wobei die erste Flächenelektrode (8) durch mindestens eine Isolierungslinie (8') in mindestens zwei getrennte Elektrodensegmente (8.1, 8.2, 8.3, 8.4) aufgeteilt ist,
wobei jedes Elektrodensegment (8.1, 8.2, 8.3, 8.4) der ersten Flächenelektrode (8) und die zweite Flächenelektrode (9) elektrisch mit der Steuereinheit (10) verbunden sind, so dass zwischen jedem Elektrodensegment (8.1, 8.2, 8.3, 8.4) der ersten Flächenelektrode (8) und der zweiten Flächenelektrode (9) unabhängig voneinander eine elektrische Spannung angelegt werden kann, um die optischen Eigenschaften des dazwischen befindlichen Abschnitts der aktiven Schicht (5) zu steuern,
wobei die zweite Flächenelektrode (9) keine Isolierungslinien (8') aufweist oder eine geringere Anzahl von Isolierungslinien (8') und infolgedessen eine geringere Anzahl von Elektrodensegmenten aufweist als die erste Flächenelektrode (8), so dass mindestens einem Elektrodensegment der zweiten Flächenelektrode (9) mehrere Elektrodensegmente (8.1, 8.2, 8.3, 8.4) der ersten Flächenelektrode (8) zugeordnet sind, wobei jede etwaige Isolierungslinie (8') der zweiten Flächenelektrode (9) in Durchsichtrichtung durch die Verbundscheibe mit einer Isolierungslinie (8') der ersten Flächenelektrode (8) in Deckung angeordnet ist,
wobei die Steuereinheit (10) geeignet ist, die Temperatur der Verbundscheibe zu ermitteln und eine elektrische Spannung zwischen den Elektrodensegmenten (8.1, 8.2, 8.3, 8.4) der ersten Flächenelektrode (8) einerseits und der zweiten Flächenelektrode (9) andererseits anzulegen, deren Betrag abhängig von der Temperatur der Verbundscheibe ist,
und wobei die Steuereinheit (10) an eine Gleichspannungsquelle (15) angeschlossen ist und mit mindestens einem Wechselrichter (12) ausgestattet ist, der geeignet ist, die Gleichspannung in eine Wechselspannung zu wandeln, welche an die Elektrodensegmente (8.1, 8.2, 8.3, 8.4) der ersten Flächenelektrode (8) einerseits und die zweite Flächenelektrode (9) andererseits angelegt wird,
und wobei die Steuereinheit (10) geeignet ist, die Impedanz der aktiven Schicht (5) zu bestimmen und daraus die Temperatur der Verbundscheibe zu ermitteln,
und wobei die Steuereinheit (10) geeignet ist, die Impedanz der aktiven Schicht (5) aus einer Messung der Stromaufnahme des Wechselrichters (12) zu bestimmen.

2. Verglasungseinheit nach Anspruch 1, wobei das Funktionselement (4) ein PDLC-Funktionselement, ein SPD-Funktionselement oder ein elektrochromes Funktionselement ist.

3. Verglasungseinheit nach Anspruch 1 oder 2, wobei die Steuereinheit (10) mit einem Gleichspannungswandler (11) ausgestattet ist, der geeignet ist, eine Primärspannung der Gleichspannungsquelle (15) in eine höhere Sekundärspannung zu wandeln,
und wobei der mindestens eine Wechselrichter (12) geeignet ist, die Sekundärspannung in die Wechselspannung zu wandeln, welche an die Elektrodensegmente (8.1, 8.2, 8.3, 8.4) der ersten Flächenelektrode (8) einerseits und die zweite Flächenelektrode (9) andererseits angelegt wird.

4. Verglasungseinheit nach einem der Ansprüche 1 bis 3, wobei die mindestens eine Isolierungslinie (8') eine Breite von 5 µm bis 500 µm aufweist.

5. Verfahren zum Steuern einer Verglasungseinheit mit elektrisch steuerbaren optischen Eigenschaften mit mehreren unabhängigen Schaltbereichen (S1, S2, S3, S4),
wobei die Verglasungseinheit
- eine Verbundscheibe, umfassend
- eine Außenscheibe (1) und eine Innenscheibe (2), die über eine thermoplastische Zwischenschicht (3) miteinander verbunden sind,
- ein elektrisch steuerbares Funktionselement (4), welches zwischen der Außenscheibe (1) und der Innenscheibe (2) angeordnet ist und eine aktive Schicht (5) mit elektrisch steuerbaren optischen Eigenschaften zwischen einer ersten Flächenelektrode (8) und einer zweiten Flächenelektrode (9) aufweist, und
- eine Steuereinheit (10), welche geeignet ist, die optischen Eigenschaften des Funktionselements (4) zu steuern, umfasst
wobei die erste Flächenelektrode (8) durch mindestens eine Isolierungslinie (8') in mindestens zwei getrennte Elektrodensegmente (8.1, 8.2, 8.3, 8.4) aufgeteilt ist,
wobei jedes Elektrodensegment (8.1, 8.2, 8.3, 8.4) der ersten Flächenelektrode (8) und die zweite Flächenelektrode (9) elektrisch mit der Steuereinheit (10) verbunden sind, so dass zwischen jedem Elektrodensegment (8.1, 8.2, 8.3, 8.4) der ersten Flächenelektrode (8) und der zweiten Flächenelektrode (9) unabhängig voneinander eine elektrische Spannung angelegt werden kann, um die optischen Eigenschaften des dazwischen befindlichen Abschnitts der aktiven Schicht (5) zu steuern,
wobei die zweite Flächenelektrode (9) keine Isolierungslinien (8') aufweist oder eine geringere Anzahl von Isolierungslinien (8') und infolgedessen eine geringere Anzahl von Elektrodensegmenten aufweist als die erste Flächenelektrode (8), so dass mindestens einem Elektrodensegment der zweiten Flächenelektrode (9) mehrere Elektrodensegmente (8.1, 8.2, 8.3, 8.4) der ersten Flächenelektrode (8) zugeordnet sind, wobei jede etwaige Isolierungslinie (8') der zweiten Flächenelektrode (9) in Durchsichtrichtung durch die Verbundscheibe mit einer Isolierungslinie (8') der ersten Flächenelektrode (8) in Deckung angeordnet ist,
wobei
(a) die Temperatur der Verbundscheibe bestimmt wird,
(b) mittels der Steuereinheit (10) zwischen mindestens einem Elektrodensegment (8.1, 8.2, 8.3, 8.4) der ersten Flächenelektrode (8) einerseits und der zweiten Flächenelektrode (9) andererseits eine elektrische Spannung angelegt wird, deren Betrag abhängig von der bestimmten Temperatur ist;
und wobei die Steuereinheit (10) an eine Gleichspannungsquelle (15) angeschlossen ist und mit einem Wechselrichter (12) ausgestattet ist, der die Gleichspannung in eine Wechselspannung wandelt, welche an die Elektrodensegmente (8.1, 8.2, 8.3, 8.4) der ersten Flächenelektrode (8) einerseits und die zweite Flächenelektrode (9) andererseits angelegt wird,
und wobei die Steuereinheit (10) die Impedanz der aktiven Schicht (5) bestimmt und daraus die Temperatur der Verbundscheibe bestimmt,
und wobei die Steuereinheit (10) die Impedanz der aktiven Schicht (5) aus einer Messung der Stromaufnahme des Wechselrichters (12) bestimmt.

6. Verfahren nach Anspruch 5, wobei die Steuereinheit (10) außerdem mit einem Gleichspannungswandler (11) ausgestattet ist, der eine Primärspannung der Gleichspannungsquelle (15) in eine höhere Sekundärspannung wandelt, wobei der Wechselrichter (12) die Sekundärspannung in die Wechselspannung wandelt.

7. Verfahren nach Anspruch 5 oder 6, wobei die Steuereinheit (10) den Betrag der Spannung, die zwischen dem mindestens einen Elektrodensegment (8.1, 8.2, 8.3, 8.4) der ersten Flächenelektrode (8) und der zweiten Flächenelektrode (9) angelegt wird, anhand von Kalibrationsdaten als Funktion der Temperatur und des Schaltzustands bestimmt.

8. Verwendung einer Verglasungseinheit nach einem der Ansprüche 1 bis 4 als Fensterscheibe eines Fahrzeugs, insbesondere als Windschutzscheibe oder Dachscheibe.

## Claims

1. Glazing unit with electrically controllable optical properties having a plurality of independent switching regions (S1, S2, S3, S4), comprising
- a laminated pane, comprising
- an outer pane (1) and an inner pane (2), which are connected to one another via a thermoplastic intermediate layer (3),
- an electrically controllable functional element (4) which is arranged between the outer pane (1) and the inner pane (2) and has an active layer (5) with electrically controllable optical properties between a first flat electrode (8) and a second flat electrode (9),
- a control unit (10) which is suitable for controlling the optical properties of the functional element (4),
wherein the first flat electrode (8) is divided by at least one insulation line (8') into at least two separate electrode segments (8.1, 8.2, 8.3, 8.4),
wherein each electrode segment (8.1, 8.2, 8.3, 8.4) of the first flat electrode (8) and the second flat electrode (9) are electrically connected to the control unit (10), such that an electrical voltage can be applied between each electrode segment (8.1, 8.2, 8.3, 8.4) of the first flat electrode (8) and the second flat electrode (9) independently of one another in order to control the optical properties of the section of the active layer (5) located between them,
wherein the second flat electrode (9) has no insulation lines (8') or a smaller number of insulation lines (8') and consequently has a smaller number of electrode segments than the first flat electrode (8), such that at least one electrode segment of the second flat electrode (9) is associated with a plurality of electrode segments (8.1, 8.2, 8.3, 8.4) of the first flat electrode (8), wherein any insulation line (8') of the second flat electrode (9) is arranged in the direction of view through the laminated pane in alignment with an insulation line (8') of the first flat electrode (8),
wherein the control unit (10) is suitable to ascertain the temperature of the laminated pane and to apply an electrical voltage between the electrode segments (8.1, 8.2, 8.3, 8.4) of the first flat electrode (8) and the second flat electrode (9), the magnitude of which depends on the temperature of the laminated pane,
and wherein the control unit (10) is connected to a DC voltage source (15) and is equipped with at least one inverter (12) suitable for converting the DC voltage into an AC voltage which is applied to the electrode segments (8.1, 8.2, 8.3, 8.4) of the first flat electrode (8) and the second flat electrode (9),
and wherein the control unit (10) is suitable for determining the impedance of the active layer (5) and for ascertaining the temperature of the laminated pane from it,
and wherein the control unit (10) is suitable for determining the impedance of the active layer (5) from a measurement of the current consumption of the inverter (12).

2. Glazing unit according to claim 1, wherein the functional element (4) is a PDLC functional element, an SPD functional element or an electrochromic functional element.

3. Glazing unit according to claim 1 or 2, wherein the control unit (10) is equipped with a DC voltage converter (11) suitable for converting a primary voltage of the DC voltage source (15) into a higher secondary voltage, and wherein the at least one inverter (12) is suitable for converting the secondary voltage into the AC voltage which is applied to the electrode segments (8.1, 8.2, 8.3, 8.4) of the first flat electrode (8) and the second flat electrode (9).

4. Glazing unit according to any of claims 1 to 3, wherein the at least one insulation line (8') has a width of 5 µm to 500 µm.

5. Method for controlling a glazing unit with electrically controllable optical properties having a plurality of independent switching regions (S1, S2, S3, S4), wherein the glazing unit comprises
- a laminated pane, comprising
- an outer pane (1) and an inner pane (2), which are connected to one another via a thermoplastic intermediate layer (3),
- an electrically controllable functional element (4) which is arranged between the outer pane (1) and the inner pane (2) and has an active layer (5) with electrically controllable optical properties between a first flat electrode (8) and a second flat electrode (9), and
- a control unit (10) which is suitable for controlling the optical properties of the functional element (4),
wherein the first flat electrode (8) is divided by at least one insulation line (8') into at least two separate electrode segments (8.1, 8.2, 8.3, 8.4), wherein each electrode segment (8.1, 8.2, 8.3, 8.4) of the first flat electrode (8) and the second flat electrode (9) are electrically connected to the control unit (10), such that an electrical voltage can be applied between each electrode segment (8.1, 8.2, 8.3, 8.4) of the first flat electrode (8) and the second flat electrode (9) independently of one another in order to control the optical properties of the section of the active layer (5) located between them,
wherein the second flat electrode (9) has no insulation lines (8') or a smaller number of insulation lines (8') and consequently has a smaller number of electrode segments than the first flat electrode (8), such that at least one electrode segment of the second flat electrode (9) is associated with a plurality of electrode segments (8.1, 8.2, 8.3, 8.4) of the first flat electrode (8), wherein any insulation line (8') of the second flat electrode (9) is arranged in the direction of view through the laminated pane in alignment with an insulation line (8') of the first flat electrode (8),
wherein
(a) the temperature of the laminated pane is determined,
(b) by means of the control unit (10) an electrical voltage is applied between at least one electrode segment (8.1, 8.2, 8.3, 8.4) of the first flat electrode (8) and the second flat electrode (9), the magnitude of which depends on the determined temperature;
and wherein the control unit (10) is connected to a DC voltage source (15) and is equipped with an inverter (12) which converts the DC voltage into an AC voltage which is applied to the electrode segments (8.1, 8.2, 8.3, 8.4) of the first flat electrode (8) and the second flat electrode (9),
and wherein the control unit (10) determines the impedance of the active layer (5) and determines the temperature of the laminated pane from it,
and wherein the control unit (10) determines the impedance of the active layer (5) from a measurement of the current consumption of the inverter (12).

6. Method according to claim 5, wherein the control unit (10) is further equipped with a DC voltage converter (11) which converts a primary voltage of the DC voltage source (15) into a higher secondary voltage, wherein the inverter (12) converts the secondary voltage into the AC voltage.

7. Method according to claim 5 or 6, wherein the control unit (10) determines the magnitude of the voltage applied between the at least one electrode segment (8.1, 8.2, 8.3, 8.4) of the first flat electrode (8) and the second flat electrode (9) on the basis of calibration data as a function of temperature and switching state.

8. Use of a glazing unit according to any of claims 1 to 4 as a window pane of a vehicle, in particular as a windshield or roof panel.

## Revendications

1. Unité de vitrage comportant des propriétés optiques pouvant être commandées électriquement et comportant plusieurs zones de commutation (S1, S2, S3, S4) indépendantes, comprenant
- un vitrage feuilleté, comprenant
- une vitre externe (1) et une vitre interne (2), lesquelles sont reliées entre elles par l'intermédiaire d'une couche intermédiaire (3) thermoplastique,
- un élément fonctionnel (4) pouvant être commandé électriquement, lequel est disposé entre la vitre externe (1) et la vitre interne (2) et présente une couche active (5) comportant des propriétés optiques pouvant être commandées électriquement entre une première électrode plane (8) et une seconde électrode plane (9),
- une unité de commande (10) qui est adaptée pour commander les propriétés optiques de l'élément fonctionnel (4),
dans laquelle la première électrode plane (8) est divisée par au moins une ligne d'isolation (8') en au moins deux segments d'électrode (8.1, 8.2, 8.3, 8.4) séparés,
dans laquelle chaque segment d'électrode (8.1, 8.2, 8.3, 8.4) de la première électrode plane (8) et la seconde électrode plane (9) sont connectés électriquement à l'unité de commande (10), de sorte qu'une tension électrique peut être appliquée entre chaque segment d'électrode (8.1, 8.2, 8.3, 8.4) de la première électrode plane (8) et la seconde électrode plane (9) indépendamment les uns des autres afin de commander les propriétés optiques de la section de la couche active (5) située entre elles,
dans laquelle la seconde électrode plane (9) ne présente pas de lignes d'isolation (8') ou présente un nombre moindre de lignes d'isolation (8') et, par conséquent, un nombre de segments d'électrode inférieur par rapport à celui de la première électrode plane (8), de sorte que plusieurs segments d'électrode (8.1, 8.2, 8.3, 8.4) de la première électrode plane (8) sont associés à au moins un segment d'électrode de la seconde électrode de surface (9), dans laquelle chaque ligne d'isolation (8') éventuelle de la seconde électrode plane (9) est disposée de manière à coïncider, dans le sens de la transparence à travers le vitrage feuilleté, avec une ligne d'isolation (8') de la première électrode plane (8),
dans laquelle l'unité de commande (10) est adaptée pour déterminer la température du vitrage feuilleté et appliquer une tension électrique entre les segments d'électrode (8.1, 8.2, 8.3, 8.4) de la première électrode de surface (8) d'une part et la seconde électrode de surface (9) d'autre part, la valeur de ladite tension électrique dépendant de la température du vitrage feuilleté,
et dans laquelle l'unité de commande (10) est raccordée à une source de tension continue (15) et est équipée d'au moins un onduleur (12) qui est adapté pour convertir la tension continue en une tension alternative qui est appliquée aux segments d'électrode (8.1, 8.2, 8.3, 8.4) de la première électrode de surface (8) d'une part et à la seconde électrode de surface (9) d'autre part,
et dans laquelle l'unité de commande (10) est adaptée pour déterminer l'impédance de la couche active (5) et déduire la température du vitrage feuilleté à partir de celle-ci,
et dans laquelle l'unité de commande (10) est adaptée pour déterminer l'impédance de la couche active (5) à partir d'une mesure de la consommation de courant de l'onduleur (12).

2. Unité de vitrage selon la revendication 1, dans laquelle l'élément fonctionnel (4) est un élément fonctionnel PDLC, un élément fonctionnel SPD ou un élément fonctionnel électrochrome.

3. Unité de vitrage selon la revendication 1 ou 2, dans laquelle l'unité de commande (10) est équipée d'un convertisseur de tension continue (11) qui est adapté pour convertir une tension primaire de la source de tension continue (15) en une tension secondaire plus élevée, et dans laquelle l'au moins un onduleur (12) est adapté pour convertir la tension secondaire en tension alternative qui est appliquée aux segments d'électrode (8.1, 8.2, 8.3, 8.4) de la première électrode plane (8) d'une part et à la seconde électrode plane (9) d'autre part.

4. Unité de vitrage selon l'une des revendications 1 à 3, dans laquelle l'au moins une ligne d'isolation (8') présente une épaisseur allant de 5 µm à 500 µm.

5. Procédé pour la commande d'une unité de vitrage comportant des propriétés optiques pouvant être commandées électriquement et comportant plusieurs zones de commutation (S1, S2, S3, S4) indépendantes, dans lequel l'unité de vitrage comprend
- un vitrage feuilleté, comprenant
- une vitre externe (1) et une vitre interne (2), lesquelles sont reliées entre elles par l'intermédiaire d'une couche intermédiaire (3) thermoplastique,
- un élément fonctionnel (4) pouvant être commandé électriquement, lequel est disposé entre la vitre externe (1) et la vitre interne (2) et présente une couche active (5) comportant des propriétés optiques pouvant être commandées électriquement entre une première électrode plane (8) et une seconde électrode plane (9), et
- une unité de commande (10) qui est adaptée pour commander les propriétés optiques de l'élément fonctionnel (4),
dans lequel la première électrode plane (8) est divisée en au moins deux segments d'électrode (8.1, 8.2, 8.3, 8.4) séparés par au moins une ligne d'isolation (8'), dans lequel chaque segment d'électrode (8.1, 8.2, 8.3, 8.4) de la première électrode plane (8) et la seconde électrode plane (9) sont connectés électriquement à l'unité de commande (10), de sorte qu'une tension électrique peut être appliquée entre chaque segment d'électrode (8.1, 8.2, 8.3, 8.4) de la première électrode plane (8) et la seconde électrode plane (9) indépendamment les uns des autres afin de commander les propriétés optiques de la section de la couche active (5) située entre elles,
dans lequel la seconde électrode plane (9) ne présente pas de lignes d'isolation (8') ou présente un nombre moindre de lignes d'isolation (8') et, par conséquent, un nombre de segments d'électrode inférieur par rapport à celui de la première électrode plane (8), de sorte que plusieurs segments d'électrode (8.1, 8.2, 8.3, 8.4) de la première électrode plane (8) sont associés à au moins un segment d'électrode de la seconde électrode de surface (9), dans lequel chaque ligne d'isolation (8') éventuelle de la seconde électrode plane (9) est disposée de manière à coïncider, dans le sens de la transparence à travers le vitrage feuilleté, avec une ligne d'isolation (8') de la première électrode plane (8),
(a) la température du vitrage feuilleté est déterminée,
(b) au moyen de l'unité de commande (10), une tension électrique est appliquée entre au moins un segment d'électrode (8.1, 8.2, 8.3, 8.4) de la première électrode plane (8) d'une part et la seconde électrode plane (9) d'autre part, la valeur de ladite tension électrique dépendant de la température déterminée ;
et dans lequel l'unité de commande (10) est raccordée à une source de tension continue (15) et est équipée d'un onduleur (12) qui convertit la tension continue en une tension alternative, laquelle est appliquée aux segments d'électrode (8.1, 8.2, 8.3, 8.4) de la première électrode plane (8) d'une part et à la seconde électrode plane (9) d'autre part,
et dans lequel l'unité de commande (10) détermine l'impédance de la couche active (5) et détermine la température du vitrage feuilleté à partir de celle-ci,
et dans lequel l'unité de commande (10) détermine l'impédance de la couche active (5) à partir d'une mesure de la consommation de courant de l'onduleur (12).

6. Procédé selon la revendication 5, dans lequel l'unité de commande (10) est en outre équipée d'un convertisseur de tension continue (11) qui convertit une tension primaire de la source de tension continue (15) en une tension secondaire plus élevée, dans lequel l'onduleur (12) convertit la tension secondaire en tension alternative.

7. Procédé selon la revendication 5 ou 6, dans lequel l'unité de commande (10) détermine, à l'aide de données d'étalonnage en fonction de la température et de l'état de commutation, la valeur de la tension appliquée entre l'au moins un segment d'électrode (8.1, 8.2, 8.3, 8.4) de la première électrode de surface (8) et la seconde électrode de surface (9).

8. Utilisation d'une unité de vitrage selon l'une des revendications 1 à 4 comme vitre d'un véhicule, en particulier comme pare-brise ou vitre de toit.
